# EUROPÄISCHE PATENTSCHRIFT

(11) **EP 2 638 996 B1**
(45) Veröffentlichungstag und Bekanntmachung des Hinweises auf die Patenterteilung: **29.05.2019**
(21) Anmeldenummer: 13001097.8
(22) Anmeldetag: 05.03.2013
(51) Int. Cl.: B23D 47/02, B27G 19/08, B27B 9/04

(54) **Hand-Trennmaschine**
Manual separation machine
Machine de coupe portable

(30) Priorität: 16.03.2012 DE 102012005165
(43) Veröffentlichungstag der Anmeldung: 18.09.2013
(73) Patentinhaber: Festool GmbH, 73240 Wendlingen am Neckar (DE)
(72) Erfinder: Volker, Barth, 73732 Esslingen (DE); Wolfgang, Spengler, 73272 Neidlingen (DE)
(74) Vertreter: Patentanwälte Bregenzer und Reule Partnerschaftsgesellschaft mbB

(56) Entgegenhaltungen:
- DE-A1- 2 854 369
- DE-A1- 3 912 307
- DE-U1- 29 820 244
- JP-U- H 047 101
- US-A- 2 819 742

## Beschreibung

Die Erfindung betrifft eine Hand-Trennmaschine, insbesondere eine elektrische Handsägemaschine oder Mauerschlitzfräse, gemäß dem Oberbegriff des Anspruchs 1.

Eine derartige Hand-Trennmaschine geht z.B. aus DE 298 20 244 U1 hervor.

Eine derartige Hand-Trennmaschine ist beispielsweise eine Säge, eine Mauerschlitzfräse oder dergleichen. Mithilfe der Hand-Trennmaschine können Sägeschnitte oder Trennschnitte in ein Werkstück, beispielsweise eine Möbelplatte, eine Mauerwand oder dergleichen, eingebracht werden. Das Trenn-Werkzeug umfasst beispielsweise ein Sägeblatt, eine Trennscheibe oder dergleichen.

Zum Schutz eines Bedieners ist es üblich, dass in Arbeitsrichtung hinter dem Sägeblatt ein sogenannter Spaltkeil angeordnet ist, der verhindert, dass sich Flanken des Werkstücks, die durch den Trennschnitt an sich voneinander getrennt sind, wieder aufeinander zu bewegen, was dazu führen kann, dass das Trenn-Werkzeug zwischen die sich aufeinander zu bewegenden Flanken eingeklemmt wird. Das sich weiter drehende Trenn-Werkzeug führt zu einem Rückstoß, bei dem die Hand-Trennmaschine vom Werkstück weg beaufschlagt wird, was zu Verletzungen des Bedieners führen kann.

Es können jedoch Schutzmaßnahmen vorgesehen sein, damit ein solcher Spaltkeil nicht mehr erforderlich ist. Eine Hand-Trennmaschine ohne Spaltkeil lässt sich jedoch schlechter führen.

Es ist daher die Aufgabe der vorliegenden Erfindung, die Handhabung einer Hand-Trennmaschine zu verbessern.

Zur Lösung der Aufgabe ist eine Hand-Trennmaschine gemäß der technischen Lehre des Anspruchs 1 vorgesehen.

Es ist ein Grundgedanke der vorliegenden Erfindung, ein Führungselement bereitzustellen, das die Führung der Hand-Trennmaschine bezüglich des Werkstücks verbessert, jedoch anders als beispielsweise ein Spaltkeil beim Arbeiten und Verstauen der Hand-Trennmaschine nicht im Wege ist, zum Beispiel wenn das Trenn-Werkzeug im Rahmen einer Tauchbewegung in Tiefeneinstellrichtung oder Schnitttiefenrichtung zwischen einer oberen Tiefeneinstellposition und einer unteren Tiefeneinstellposition bewegt wird.

Anhand der vorteilhaft vorhandenen Führungslageranordnung zum Verstellen des Führungselements entlang der Tiefeneinstellrichtung oder Schnitttiefenrichtung ist es möglich, dass das Führungselement bezüglich des Führungskörpers, beispielsweise bezüglich eines Arbeitstischs oder einer Führungsplatte, in Tiefeneinstellrichtung oder Schnitttiefenrichtung beweglich gelagert und in Arbeitsrichtung vor oder hinter dem Trenn-Werkzeug positionierbar ist.

Zweckmäßigerweise ist das Führungselement in Arbeitsrichtung hinter dem Trenn-Werkzeug angeordnet. Es versteht sich, dass auch vor dem Trenn-Werkzeug ein Führungselement gemäß der Erfindung angeordnet sein kann. Weiterhin ist es möglich, das vor und hinter dem Trenn-Werkzeug bezüglich der Arbeitsrichtung jeweils ein Führungselement angeordnet ist.

Mithilfe eines Tiefeneinstelllagers ist es möglich, die Werkzeugaufnahme, insbesondere zusammen mit der Motorbaugruppe, in unterschiedliche Tiefeneinstellpositionen zu bringen. Es ist aber auch möglich, dass die Werkzeugaufnahme anhand des Tiefeneinstelllagers separat von der Motorbaugruppe verstellbar sein könnte.

In der oberen Tiefeneinstellposition steht zweckmäßigerweise das Trenn-Werkzeug nicht vor eine Unterseite des Führungskörpers bzw. der Führungsplatte vor. Es versteht sich, dass das Trenn-Werkzeug in der oberen Tiefeneinstellposition um eine definierte Weite oder Tiefe vor die Unterseite des Führungskörpers vorstehen kann.

Zwar sieht eine bevorzugte Ausführungsform der Erfindung vor, dass die Werkzeugaufnahme oder die Motorbaugruppe anhand eines Tiefeneinstelllagers in Gestalt eines Schwenklagers bezüglich des Führungskörpers schwenkbar gelagert ist. Eine lineare Verstellung oder eine Kombination aus linearer Verstellung und Schwenkverstellung sind bei dem Tiefeneinstelllager auch möglich.

Das Trenn-Werkzeug ist anhand des Tiefeneinstelllagers zweckmäßigerweise zwischen einer oberen Tiefeneinstellposition oder Ruhestellung, bei der es nicht oder wenig vor die Unterseite des Führungskörpers vorsteht, und mindestens einer unteren Tiefeneinstellposition oder Arbeitsstellung, bei der es vor die Unterseite des Führungskörpers vorsteht, verstellbar. Vorteilhaft sind mehrere, insbesondere stufenlos wählbare, untere Tiefeneinstellpositionen oder Arbeitsstellungen zur Einstellung unterschiedlicher Schnitt- oder Trenntiefen des Trenn-Werkzeugs. Zur Einstellung der Tiefeneinstellpositionen ist vorteilhaft eine Tiefeneinstelleinrichtung vorgesehen, die ein für unterschiedliche Tiefen einstellbares Anschlagelement aufweist, an der die Motorbaugruppe bei Erreichen der gewählten Tiefeneinstellposition anschlägt.

Das Führungselement ist zweckmäßigerweise anhand der Führungslageranordnung zwischen einer Nichtgebrauchsstellung, bei der es nicht vor die Unterseite des Führungskörpers vorsteht, und einer Gebrauchsstellung, bei der es vor die Unterseite des Führungskörpers vorsteht, verstellbar. Somit kann das Führungselement sozusagen inaktiv gestellt werden, so dass es bei Nichtgebrauch nicht stört.

Das Führungselement ist in der Nichtgebrauchsstellung beispielsweise in einem Innenraum einer das Trenn-Werkzeug abdeckenden Schutzabdeckung, zum Beispiel einer Schutzhaube, angeordnet. Die Schutzhaube oder Schutzabdeckung kann bezüglich der Motorbaugruppe fest sein oder beweglich, insbesondere schwenkbeweglich. Zweckmäßigerweise hat die Schutzhaube eine Aussparung für das Führungselement und/oder Führungslageranordnung. Die bewegliche, z.B. schwenkbare, Schutzhaube kann mindestens eine Stellkontur und/oder mindestens eine Mitnahmekontur zum Verstellen des Führungselements in die Gebrauchsstellung und/oder die Nichtgebrauchsstellung und/oder einen Anschlag für das Führungselement aufweisen.

Die Hand-Trennmaschine weist zweckmäßigerweise Kopplungsmittel zu einer Bewegungskoppelung des Führungselements mit einem die Werkzeugaufnahme lagernden Bauteil, insbesondere der Motorbaugruppe, auf.

Zwischen dem die Werkzeugaufnahme lagernden Bauteil, z.B. der Motorbaugruppe, und dem Führungselement ist, insbesondere bei den Kopplungsmitteln, zweckmäßigerweise ein Freigang vorhanden. Der Freigang ermöglicht eine Weiterverstellung des die Werkzeugaufnahme lagernden Bauteils, z.B. der Motorbaugruppe, auch wenn das Führungselement in einer vorbestimmten Position, z.B. der Gebrauchsstellung, bleibt und/oder eine Verstellung des Führungselements relativ zu dem die Werkzeugaufnahme lagernden Bauteil, z.B. der Motorbaugruppe, auch wenn das die Werkzeugaufnahme lagernde Bauteil in einer vorbestimmten Tiefeneinstellposition steht oder stehen bleibt.

Die Kopplungsmittel sind vorteilhaft dazu ausgestaltet, dass bei einer Verstellung der Werkzeugaufnahme aus der oberen in die mindestens eine untere Tiefeneinstellposition ein freier Endbereich des Führungselements dem Trenn-Werkzeug vorauseilend oder simultan mit dem Trenn-Werkzeug vor die Unterseite des Führungskörpers verstellt wird. Somit steht also das Führungselement bereit, wenn das Trenn-Werkzeug vor die Unterseite des Führungskörpers vorsteht und der Trennschnitt ausgeführt werden soll. Eine in der Zeichnung näher erläuterte Ausführungsform sieht vor, dass das Führungselement ganz oder zumindest nahezu vollständig in die Gebrauchsstellung verstellt ist, bevor das Trenn-Werkzeug überhaupt vor die Unterseite des Führungskörpers hervortaucht. Eine andere Ausführungsform, die ebenfalls erläutert ist, sieht vor, dass das Führungselement zusammen mit dem Trenn-Werkzeug vor die Unterseite des Führungskörpers vor verstellt wird und dabei dem Trenn-Werkzeug nicht oder nur unwesentlich vorauseilt.

In Gegenrichtung ist es vorteilhaft, wenn die Kopplungsmittel so ausgestaltet sind, dass bei einer Verstellung der Werkzeugaufnahme aus der mindestens einen unteren Tiefeneinstellposition in Richtung einer oder der oberen Tiefeneinstellposition, z.B. einer Ruhestellung, das Trenn-Werkzeug dem freien Endbereich des Führungselements vorauseilt oder simultan mit dem Trenn-Werkzeug zur Unterseite des Führungskörpers hin verstellt wird.

Eine besonders bevorzugte Ausführungsform der Erfindung sieht vor, dass der freie Endbereich des Führungselements zu der Unterseite des Führungskörpers in der Gebrauchsstellung bei mindestens zwei Tiefeneinstellpositionen des Trenn-Werkzeugs, in denen das Trenn-Werkzeug unterschiedlich weit vor die Unterseite des Führungskörpers vorsteht, im Wesentlichen gleich bleibt.

So kann beispielsweise eine bevorzugte Kinematik vorsehen, dass zunächst das Führungselement vor die Unterseite des Führungskörpers hervortaucht, dann das Trenn-Werkzeug folgt. Wenn das Trenn-Werkzeug noch weiter vor die Unterseite des Führungskörpers vor verstellt wird, bleibt das Führungselement an Ort und Stelle, schwenkt also beispielsweise nicht mehr weiter aus.

In umgekehrter Richtung ist die Kinematik vorteilhaft sinngemäß ähnlich getroffen, das heißt dass beispielsweise zunächst das Trenn-Werkzeug aus einer weiter unten liegenden Tiefeneinstellposition in Richtung der oberen Tiefeneinstellposition bewegt wird, während das Führungselement noch ortsfest bleibt. Erst in einem letzten Bewegungsabschnitt in Richtung der oberen Tiefeneinstellposition ist die Bewegungskopplung so ausgestaltet, dass das Führungselement in Richtung der Nichtgebrauchsstellung verstellt, insbesondere mitgenommen, wird.

Zweckmäßigerweise ist vorgesehen, dass das Führungselement auch dann in die Nichtgebrauchsstellung, z.B. hinter die Unterseite des Führungskörpers zurück, verstellbar ist, wenn das Trenn-Werkzeug eine untere, zum Trennen des Werkstücks geeignete Tiefeneinstellposition einnimmt. Das Führungselement ist also nachgiebig und kann sozusagen aus dem Weg geschafft werden. Beispielsweise ist ein Freigang zwischen dem Führungselement und der Motorbaugruppe, an der das Werkzeuglager vorgesehen ist, vorhanden. Es ist aber auch möglich, dass das Führungselement oder ein das Führungselement halten des Organ, zum Beispiel der nachfolgend beschriebenen Schwenkarm, an dem das Führungselement angeordnet ist, nachgiebig ist, zum Beispiel biegeflexibel, so dass das Führungselement in Richtung der Unterseite des Führungskörpers nachgiebig ist, auch wenn das Trenn-Werkzeug eine untere Tiefeneinstellposition einnimmt.

Eine bevorzugte Ausführungsform der Erfindung sieht vor, dass an einem die Werkzeugaufnahme lagernden Bauteil, zum Beispiel der Motorbaugruppe, und/oder an dem Führungskörper und/oder auch einem mit dem Führungskörper verbundenen Bauteil, zum Beispiel einem Gehäusebereich zur Aufnahme des Trenn-Werkzeugs, einer Schutzhaube für das Trenn-Werkzeug oder dergleichen, mindestens eine Stellkontur angeordnet ist, die mit mindestens einer Stellgegenkontur an dem Führungselement und/oder einem das Führungselement haltenden Bauteil, zum Beispiel dem später noch beschriebenen Schwenkarm, und/oder an der Führungslageranordnung, zum Beispiel an einem Lagerelement, zusammenwirkt, um das Führungselement in die Nichtgebrauchsstellung oder die Gebrauchsstellung zu verstellen oder eine Bewegung des Führungselements in der Nichtgebrauchsstellung oder der Gebrauchsstellung zu begrenzen. Somit kann also das Führungselement beispielsweise nicht mehr über die Gebrauchsstellung oder Nichtgebrauchsstellung hinaus verstellt werden, weil es an der Stellkontur anschlägt. Es versteht sich, dass mehrere Stellkonturen und oder mehrere Stellgegenkonturen vorhanden sein können.

Bevorzugt umfasst die mindestens eine Stellkontur einen Nichtgebrauchsstellung-Anschlag, an dem eine Stellgegenkontur des Führungselements bei einer Verstellung der Werkzeugaufnahme in Richtung der oberen Tiefeneinstellposition anschlägt, und um das Führungselement in Richtung der Nichtgebrauchsstellung zu Verstellen. Vorzugsweise sind der Anschlag und/oder die Stellgegenkontur abgerundet oder kurvenförmig, so dass sie aneinander entlang gleiten können. Der Nichtgebrauchsstellung-Anschlag ist beispielsweise im Innenraum einer Schutzhaube angeordnet, in der das Trenn-Werkzeug in der oberen Tiefeneinstellposition aufgenommen ist.

Eine weitere bevorzugte Ausführungsform sieht vor, dass die mindestens eine Stellkontur einen Gebrauchsstellung-Anschlag umfasst, an dem eine Stellgegenkontur des Führungselements bei einer Verstellung der Werkzeugaufnahme in Richtung einer unteren Tiefeneinstellposition anschlägt, um eine Bewegung des Führungselements in Richtung der Gebrauchsstellung zu begrenzen. Der Gebrauchsstellung-Anschlag ist beim ersten in der Zeichnung dargestellten Ausführungsbeispiel beispielsweise an der Motorbaugruppe vorgesehen, so dass das Führungselement nicht über die Gebrauchsstellung hinaus verstellt, beispielsweise verschwenkt werden kann. Eine andere Ausführungsform im Rahmen des zweiten Ausführungsbeispiels erläuterte Ausführungsform der Erfindung sieht vor, dass der Gebrauchsstellung-Anschlag an dem Führungskörper oder einem mit diesem verbundenen Bauteil vorgesehen. Das Führungselement wird beispielsweise durch Schwerkraft oder eine Feder belastet in Richtung der Gebrauchsstellung bewegt, kann jedoch nicht über die Gebrauchsstellung hinaus bewegt werden, weil es an den Gebrauchsstellung-Anschlag anschlägt.

Die Stellkontur und/oder Stellgegenkontur kann also beispielsweise eine Art passive Komponente sein, beispielsweise einen Anschlag, eine Führungsfläche oder dergleichen umfassen, die die Bewegung des Führungselements bei einer Mitnahme durch eine andere Komponente, zum Beispiel die Motorbaugruppe, begrenzt, lenkt oder führt.

Die beispielsweise an der Motorbaugruppe oder einem bezüglich des Führungskörpers beim Betrieb der Hand-Trennmaschine ortsfesten Bauteil angeordnete Stellkontur und/oder die mindestens eine Stellgegenkontur des Führungselements umfassen zweckmäßigerweise eine Mitnahmekontur, beispielsweise eine Schiebe-Mitnahmekontur und/oder eine Drehmitnahmekontur. Somit kann also beispielsweise die Motorbaugruppe das Führungselement aktiv in Richtung der Gebrauchsstellung oder der Nichtgebrauchsstellung mitnehmen.

Die Kopplungsmittel umfassen beispielsweise eine Mitnahmekontur, die an einem die Werkzeugaufnahme lagernden Bauteil und/oder an einem mit dem Führungskörper verbundenen Bauteil angeordnet sein kann. Weiterhin ist vorteilhaft eine Gegenmitnahmekontur an dem Führungselement oder einem mit diesem verbundenen oder gekoppelten Bauteil, beispielsweise der Führungslageranordnung oder einem nachfolgend noch beschriebenen Schwenkarm, vorhanden, das mit der Mitnahmekontur zusammenwirkt, um das Führungselement in die Nichtgebrauchsstellung oder die Gebrauchsstellung zu verstellen. Selbstverständlich können mehrere Mitnahmekonturen und und/oder Gegenmitnahmekonturen vorgesehen sein, um gewünschte oder vorteilhafte Kinematiken zu verwirklichen.

Die Führungslageranordnung lagert das Führungselement zweckmäßigerweise um eine Drehachse, insbesondere die Werkzeugachse eines die Werkzeugaufnahme drehbar lagernden Werkzeug-Lagers, schwenkbar und/oder linear oder ausschließlich schwenkbar oder linear verschieblich. Bevorzugt ist jedoch eine reine Schwenklagerung, die in der Zeichnung noch näher erläutert ist. Der Bezugspunkt für die Lagerung des Führungselements wird also von der Werkzeugachse gebildet, so dass die Position des Führungselements durch die Werkzeugachse bestimmt ist, dieses also optimal zum jeweiligen Trenn-Werkzeug positionierbar ist. Auf diesem Wege kann auch eine Bewegungsmitnahme realisiert werden, d.h. wenn sich die Werkzeugaufnahme zwischen den Tiefeneinstellpositionen bewegt, nimmt sie gleichzeitig mindestens eine Komponente des Führungselements, vorzugsweise insgesamt das Führungselement mit. Das Führungselement seinerseits wiederum kann um die Werkzeugachse beispielsweise schwenken und/oder ist verschieblich dazu gelagert, so dass eine Relativbewegung des Führungselements zu Werkzeugachse trotz des Bezugs zur Werkzeugachse möglich ist.

Die Werkzeugaufnahme ist beispielsweise an der Motorbaugruppe um eine Werkzeugachse anhand des Werkzeug-Lagers drehbar gelagert. Das Führungselement kann von der Werkzeugachse durchsetzt sein. Bevorzugt ist jedoch ein Schwenkarm, an dem das Führungselement angeordnet ist, von der Werkzeugachse durchsetzt.

Die Erfindung sieht vor, dass das Führungselement an einem Schwenkarm angeordnet ist, der um die Werkzeugachse des die Werkzeugaufnahme drehbar lagernden Werkzeug-Lagers schwenkbar gelagert ist. Somit kann also das Führungselement sozusagen um die Werkzeugachse herum schwenken.

Das Führungselement steht beispielsweise von einem freien, von dem Werkzeug-Lager entfernten Endbereich des Schwenkarms ab. Der Schwenkarm und das Führungselement sind zweckmäßigerweise einstückig.

Der Schwenkarm kann platzsparend zwischen dem Trenn-Werkzeug und dem Antriebsmotor angeordnet sein. Es versteht sich, dass der Schwenkarm auch auf der entgegengesetzten Seite des Trenn-Werkzeugs oder der Werkzeugaufnahme angeordnet sein kann, so dass das Trenn-Werkzeug zwischen dem Schwenkarm und dem Antriebsmotor positioniert ist. Beispielsweise könnte man den Schwenkarm an einer Abdeckung beweglich lagern, die zur Abdeckung des Trenn-Werkzeugs an einer dem Antriebsmotor gegenüberliegenden Seite des Trenn-Werkzeugs vorgesehen ist.

An dieser Stelle sei bemerkt, dass die Führungslageranordnung auch bei anderer Ausgestaltung, das heißt ohne den vorgenannten Schwenkarm, eine Lagerung an einer derartigen Abdeckung für das Trenn-Werkzeug vorsehen kann. Selbstverständlich kann das Führungselement auch an anderen Komponenten der Hand-Trennmaschine beweglich gelagert sein, zum Beispiel dem Führungskörper oder einem mit diesem verbunden Gehäuseteil.

Bevorzugt ist vorgesehen, dass das Führungselement durch die Führungslageranordnung an der Motorbaugruppe gelagert ist. Somit sorgt eine Verstellung der Motorbaugruppe als Ganzes dafür, dass auch das Führungselement mitgenommen wird.

Das Führungselement ist zweckmäßigerweise durch eine Federanordnung in Richtung der Nichtgebrauchsstellung und/oder in Richtung der Gebrauchsstellung federbelastet. Eine Federanordnung kann z.B. eine Schraubenfeder und/oder ein elastisches Gummi- oder Kunststoffteil umfassen. Das Führungselement ist dann vorzugsweise nachgiebig und kann entgegen der Kraft der Federanordnung aus seiner aktuellen Stellung heraus, z.B. von der Gebrauchsstellung in die Nichtgebrauchsstellung, verstellt werden.

Eine Federbelastung in beide der vorgenannten Stellungen kann beispielsweise über einen Kipppunkt oder Totpunkt hinweg führen, so dass das Führungselement in jeder dieser Stellungen stabil bleibt. Bevorzugt ist es, wenn das Führungselement in Richtung der Nichtgebrauchsstellung federbelastet ist. Dies ermöglicht beispielsweise, dass das Führungselement nachgibt, wenn es bezüglich der Tiefeneinstellrichtung oder Schnitttiefenrichtung auf einen Widerstand, zum Beispiel das Werkstück stößt, in Gegenrichtung jedoch durch die Feder oder Federanordnung nachgestellt wird. Selbstverständlich ist es auch möglich, dass das Führungselement beispielsweise durch Schwerkraft, z.B. durch sein Eigengewicht und/oder auch anhand eines Gegengewichts, belastet in Richtung der Gebrauchsstellung und/oder der Nichtgebrauchsstellung betätigbar ist. Es kann vorteilhaft vorgesehen sein, dass in einer Richtung eine Feder wirkt, in die andere Richtung die Schwerkraft des Führungselements oder einer das Führungselement haltenden Komponente.

Die Hand-Trennmaschine hat einen Staubabfuhr-Kanal, beispielsweise im Bereich der Motorbaugruppe. Die Führungslageranordnung und/oder das Führungselement sind zweckmäßigerweise so ausgestaltet, dass sie zumindest bei der Herstellung des Trennschnittes, d.h. in einer unteren Tiefeneinstellposition des Trenn-Werkzeugs, außerhalb der Staubabfuhr-Kanals angeordnet sind. Dadurch ist der Querschnitte Staubabfuhr-Kanals nicht beeinträchtigt und eine optimale Staubabfuhr möglich.

Vorteilhaft ist bei dem Führungselement, das bezogen auf die Arbeitsrichtung bei der Herstellung des Trennschnittes eine Gebrauchsstellung einnimmt und dabei vor oder hinter dem Trenn-Werkzeug positioniert ist, vorgesehen , dass das Führungselement in seiner Gebrauchsstellung in der Tiefeneinstellrichtung oder Schnitttiefenrichtung um eine maximale Führungselement-Tiefe vor die Unterseite des Führungskörpers vorsteht, die kleiner als eine Werkzeug-Tiefe des Trenn-Werkzeugs ist, mit der das Trenn-Werkzeug in seiner untersten Tiefeneinstellposition vor die Unterseite des Führungskörpers vorsteht.

Es ist ein Grundgedanke dabei, dass zwar kein Spaltkeil, jedoch ein Führungselement vorhanden ist, das bezogen auf die Arbeitsrichtung bei der Herstellung des Trennschnittes eine Gebrauchsstellung einnimmt und dabei vor oder hinter dem Trenn-Werkzeug positioniert ist. Das Führungselement steht in der Gebrauchsstellung jedoch nicht so weit wie das Trenn-Werkzeug vor die Unterseite des Führungskörpers vor, wenn das Trenn-Werkzeug seine unterste oder größte Tiefeneinstellposition einnimmt.

Bevorzugt ist die Führungselement-Tiefe so getroffen, dass sie maximal 80 %, vorzugsweise jedoch nur 70 %, noch weiter bevorzugt nur 50 % oder 40 % der Werkzeug-Tiefe beträgt. Allerdings ist es vorteilhaft, wenn das Führungselement zumindest ein gutes Stück vor die Unterseite des Führungskörpers vorsteht, die Führungselement-Tiefe beispielsweise minimal 40 %, vorzugsweise 30 % der Werkzeug-Tiefe beträgt. Somit ist das Führungselement zwar nicht im Weg und behindert das Arbeiten nicht, kann jedoch trotzdem seine optimale Wirkung entfalten.

Es wurde erkannt, dass auch ein relativ kurzes Führungselement ausreicht, um die Werkstück-Flanken zuverlässig auseinander zu halten. Zudem eignet sich das Führungselement zur Führung entlang des Trennschnittes bzw. entlang der Flanken des Werkstücks, die bereits auseinander geschnitten sind.

Die Hand-Trennmaschine weist zweckmäßigerweise eine Halterung für ein stationär bezüglich des Führungskörpers bezogen auf die Arbeitsrichtung vor oder hinter dem Trenn-Werkzeug fest an der Hand-Trennmaschine befestigbares Trennelement zum Eingriff in den Trennschnitt an dem Werkstück auf, wobei die Halterung mindestens eine Haltekontur an dem Führungselement und/oder der Führungslageranordnung zu einer Montage des Trennelements umfasst derart, dass das Trennelement mit dem Trenn-Werkzeug in Arbeitsrichtung fluchtet.

Ein Grundgedanke ist es dabei, dass mit dem Führungselement bzw. der Führungslageranordnung bereits Maßnahmen getroffen sind, ein zusätzliches trennendes oder führendes Element optimal mit dem Trenn-Werkzeug fluchtend anzuordnen. Die Maßgenauigkeit ist also schon gegeben, wenn das Trennelement mit den übrigen Komponenten der Hand-Trennmaschine verbunden wird. Die Halterung weist beispielsweise eine Haltekontur am Führungselement oder der Führungslageranordnung oder beiden zur Montage des Trennelements auf derart, dass das Trennelement mit dem Trenn-Werkzeug in Arbeitsrichtung fluchtet, wenn es an der Halterung angeordnet ist bzw. wenn die Haltekontur in Eingriff oder Kontakt mit dem Trennelement ist.

Das Führungselement sorgt also beispielsweise für eine Ausrichtung des Trennelement bezüglich des Trenn-Werkzeugs hinsichtlich der Arbeitsrichtung.

Das Führungselement ist zweckmäßigerweise durch das an der Hand-Trennmaschine montierte Trennelement in mindestens einer Stellung, beispielsweise seiner Nichtgebrauchsstellung, in der das Führungselement nicht vor die Unterseite des Führungskörpers vorsteht, fixierbar. Beispielsweise kann das Führungselement verschieblich und/oder schwenkbar an einer weiteren Komponente der Hand-Trennmaschine gelagert sein. Beispielsweise kann das Führungselement in eine Art Tasche verschoben werden und durch das Trennelement in dieser Tasche gehalten werden.

Beispielsweise sind das Trennelement und das Führungselement miteinander verbindbar, beispielsweise verschraubbar. Es ist aber auch möglich, dass das Trennelement das Führungselement nur sozusagen in einer Stellung hält, mit diesem aber nicht fest verbunden, zum Beispiel verschraubt ist.

Vorzugsweise ist vorgesehen, dass die mindestens eine Haltekontur eine Führungsaufnahme zur Führung des Führungselements umfasst, in der das Trennelement aufgenommen ist, wenn es an der Halterung montiert ist. Dies könnte beispielsweise die vorgenannte Tasche sein.

An der Motorbaugruppe ist zweckmäßigerweise eine Haltekontur zur Befestigung des Trennelements vorhanden. Das Trennelement macht dann also die Bewegungen der Motorbaugruppe unmittelbar mit, beispielsweise bei einer Verhinderung einer Schnitttiefe in das Werkstück.

Die Haltekontur der Motorbaugruppe umfasst zweckmäßigerweise eine Aufnahme für einen Montagebolzen, mit dem das Trennelement an der Motorbaugruppe fixierbar ist.

Das Führungselement ist zweckmäßigerweise in zumindest einer Stellung, zum Beispiel der Gebrauchsstellung oder einer davon abweichenden Stellung, von einer Schwenkachse des Tiefeneinstelllagers durchsetzt.

Das Führungselement weist zweckmäßigerweise eine Montageöffnung für einen Montagebolzen auf, mit dem das Führungselement in einer Fixierstellung, zum Beispiel der Nichtgebrauchsstellung, bezüglich der Motorbaugruppe oder an der Motorbaugruppe fixierbar ist, wobei die Montageöffnung von der Schwenkachse durchsetzt ist, so dass das in der Fixierstellung fixierte Führungselement um die Schwenkachse des Tiefeneinstelllagers schwenkbar ist. Selbstverständlich wäre es auch möglich, dass der Montagebolzen das Führungselement beispielsweise tangential stützt und so in der Nichtgebrauchsstellung hält, d.h. das Führungselement nicht durchdringt, wenn er in die Motorbaugruppe eingeschraubt ist. Somit ist also das Führungselement mit dem daran angeordneten Trennelement schwenk-verstellbar, wenn die Motorbaugruppe verschwenkt wird.

Das Trennelement bildet zweckmäßigerweise eine Stütze oder eine Halterung für eine Schutzhaube zur Abdeckung eines vor die Unterseite des Führungskörpers vorstehenden Abschnitts des Trenn-Werkzeugs. Somit kann also die Schutzhaube beispielsweise direkt am Trennelement befestigt werden, welches letztlich die Schutzhaube an Ort und Stelle hält.

Das Trennelement steht zweckmäßigerweise weiter vor die Unterseite des Führungskörpers vor als ein freier Scheitelbereich des Trenn-Werkzeugs. Vorzugsweise ist das immer bzw. unabhängig davon der Fall, welche Tiefeneinstellposition das Trenn-Werkzeug einnimmt.

Das Trennelement ist zwar vorzugsweise etwas schmaler als die Schneidelemente des Trenn-Werkzeugs, jedoch vorzugsweise so breit, dass es quer zur Arbeitsrichtung eine Trennelement-Querbreite aufweist, die größer als eine Querbreite eines Grundkörpers des Trenn-Werkzeugs, beispielsweise einer Querbreite eines Stammblattes eines Sägeblatt, ist. Somit kann das Trennelement zwar eine optimale Führungsposition und Schutzfunktion gewährleisten, neigt jedoch nicht dazu, sich im bereits durchgeführten Trennschnitt bzw. Schlitz zu verklemmen.

Die erfindungsgemäße Hand-Trennmaschine bildet zweckmäßigerweise einen Bestandteil eines Systems, das auch einen Arbeitstisch umfasst, der auf einem Untergrund abstellbar ist. Somit kann die Hand-Trennmaschine auch als eine stationäre Trennmaschine verwendet werden. Die Hand bin ich Trenn Maschine ist an der Unterseite einer Tischplatte des Arbeitstisch montierbar, so dass das Trennelement durch eine Durchtrittsöffnung nach oben vor eine Oberseite der Tischplatte vorsteht. Gerade dann ist es vorteilhaft, wenn das Trennelement eine Halterung oder Stütze für eine Schutzhaube bildet.

Insbesondere im Zusammenhang mit diesem Arbeitstisch bildet sozusagen die Unterseite des Führungskörpers der Hand-Trennmaschine eine Oberseite des Führungskörpers. Somit sind also die Formulierungen zur Thematik "Unterseite", "Oberseite" oder dergleichen nicht im Sinne einer Einschränkung zu verstehen.

Bevorzugt ist das Führungselement und/oder das Trennelement plattenartig.

Das Führungselement und/oder das Trennelement besteht vorzugsweise aus Metall. Aber auch insbesondere harter Kunststoff und/oder elastische Materialien sind bei dem Führungselement oder dem Trennelement möglich.

Ein freier Endbereich oder Scheitelbereich des Führungselements in der Gebrauchsstellung des Führungselements und ein Scheitelbereich des Trenn-Werkzeugs in einer unteren Tiefeneinstellposition des Trenn-Werkzeug haben bezüglich der Arbeitsrichtung zweckmäßigerweise einen Längsabstand. Beispielsweise ist der Scheitelbereich des Führungselements vor oder hinter dem Scheitelbereich des Trenn-Werkzeugs bezogen auf die Arbeitsrichtung positioniert. Der Längsabstand entspricht zweckmäßigerweise mindestens einem Radius des Trenn-Werkzeugs. Bevorzugt ist der Längsabstand noch ein wenig größer. Allerdings ist es vorteilhaft, wenn der das Führungselement relativ nahe beim Trenn-Werkzeugs angeordnet ist.

Ein Außenumfang des Trenn-Werkzeugs im Bereich des Führungskörpers verläuft zweckmäßigerweise tangential neben dem Führungselement, wenn das Führungselement seine Gebrauchsstellung einnimmt. Somit ist also das Führungselement nahe beim Trenn-Werkzeug, kann also optimal eine Führungsfunktion und/oder auch eine Schutzfunktion dahingehend leisten, dass die Werkstückflanken nicht zueinander hin bewegt werden und somit auch keine Querkraft auf das Trenn-Werkzeug ausüben können.

Das Führungselement weist zweckmäßigerweise einen Gleitabschnitt zum Aufgleiten auf das Werkstück oder Entlanggleiten entlang des Werkstücks auf. Der Gleitabschnitt ist zweckmäßigerweise kufenartig ausgestaltet.

Das Führungselement hat zweckmäßigerweise die Gestalt einer Finne.

Der Gleitabschnitt weist zweckmäßigerweise eine Aufgleitschräge auf, die bezüglich der Arbeitsrichtung in einem Sinne von der Unterseite des Führungskörpers weg verläuft, so dass ein in Arbeitsrichtung hinterer Abschnitt der Aufgleitschräge in der Gebrauchsstellung des Führungselements weiter vor die Unterseite des Führungskörpers absteht als ein in Arbeitsrichtung vorderer Abschnitt der Aufgleitschräge. Dadurch kann das Führungselement beispielsweise recht leicht in Richtung der Nichtgebrauchsstellung verstellt werden, so dass es sich beispielsweise nicht an Hindernissen verhaken kann.

Das Führungselement ist zwar zweckmäßigerweise etwas schmaler als die Schneidelemente des Trenn-Werkzeugs, jedoch vorzugsweise so breit, dass es quer zur Arbeitsrichtung eine Führungselement-Querbreite aufweist, die größer als eine Querbreite eines Grundkörpers des Trenn-Werkzeugs, beispielsweise einer Querbreite eines Stammblattes eines Sägeblatt, ist. Somit kann das Führungselement zwar eine optimale Führungsposition und Schutzfunktion gewährleisten, neigt jedoch nicht dazu, sich im bereits durchgeführten Trennschnitt bzw. Schlitz zu verklemmen.

Nachfolgend wird ein Ausführungsbeispiel der Erfindung anhand der Zeichnung erläutert. Es zeigen:

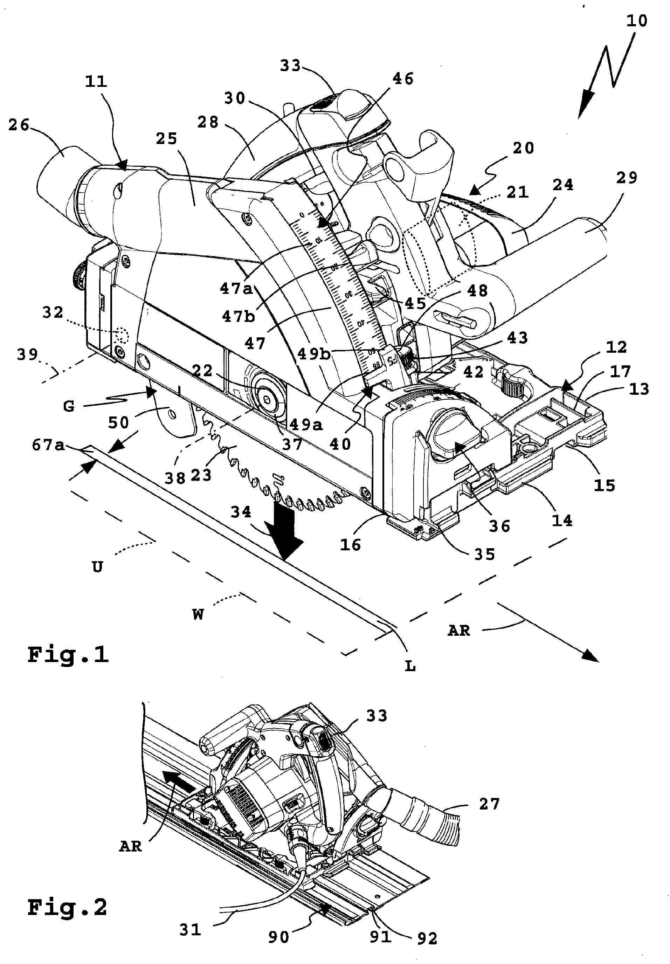

- Figur 1: eine perspektivische Schrägansicht eines erstes Ausführungsbeispiels einer Hand-Trennmaschine, die in
- Figur 2: von schräg hinten im Zusammenhang mit einer Führungsschiene dargestellt ist,

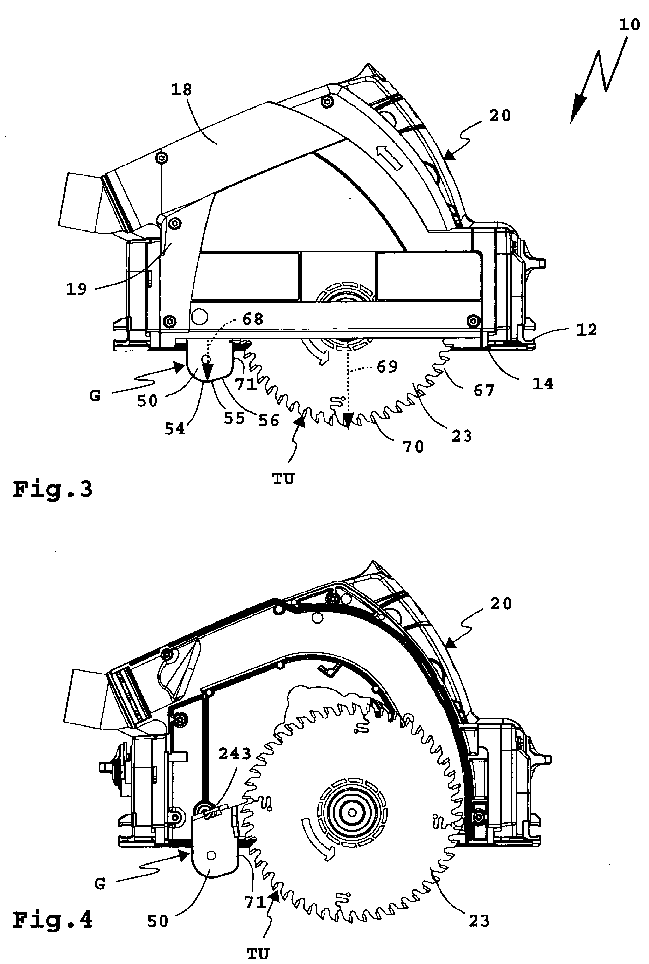

- Figur 3: die Hand-Trennmaschine gemäß Figuren 1, 2 von der Seite, wobei ihr Trenn-Werkzeug eine unterste Tiefeneinstellposition einnimmt,
- Figur 4: die Ansicht gemäß Figur 3, jedoch mit einer offenen Schutzabdeckung für das Trenn-Werkzeug, so dass ein innerer Aufbau der Hand-Trennmaschine sichtbar ist,

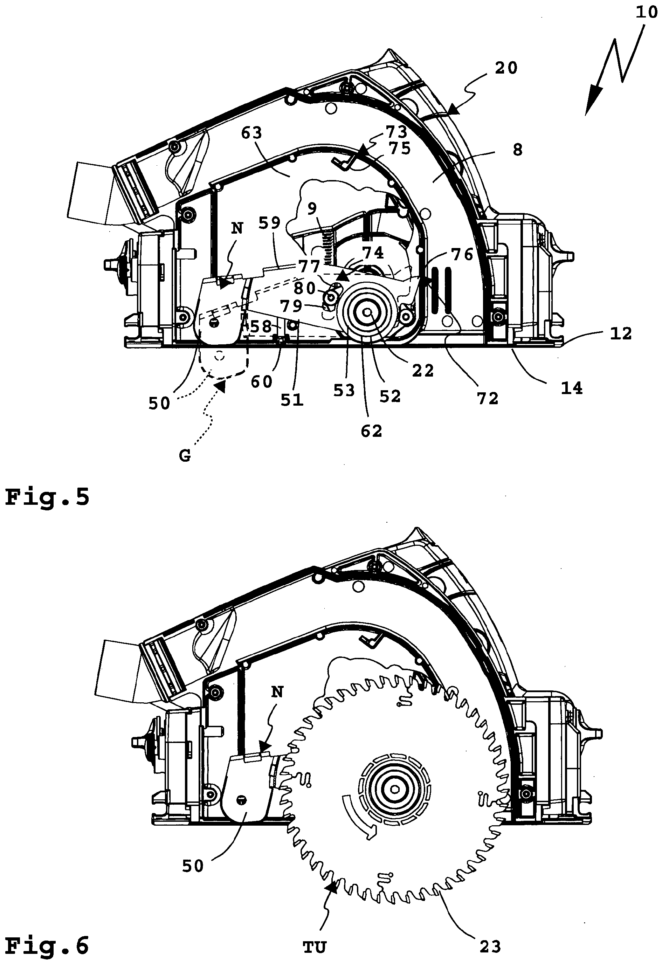

- Figur 5: eine Ansicht ähnlich derjenigen gemäß Figur 4, wobei jedoch ein Führungselement in einer Gebrauchsstellung und einer Nichtgebrauchsstellung sichtbar ist,
- Figur 6: die Ansicht gemäß Figur 5, jedoch mit Trenn-Werkzeug,

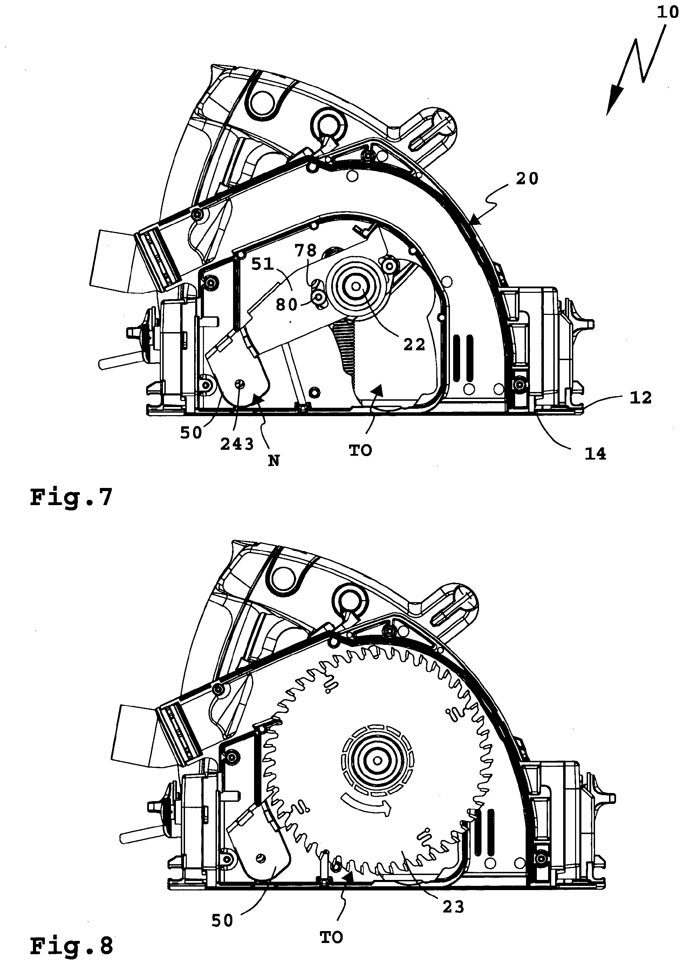

- Figur 7: eine Ansicht etwa entsprechend Figur 5, wobei jedoch die Werkzeugaufnahme eine obere Tiefeneinstellposition einnimmt,
- Figur 8: die Ansicht gemäß Figur 7, jedoch mit Trenn-Werkzeug,

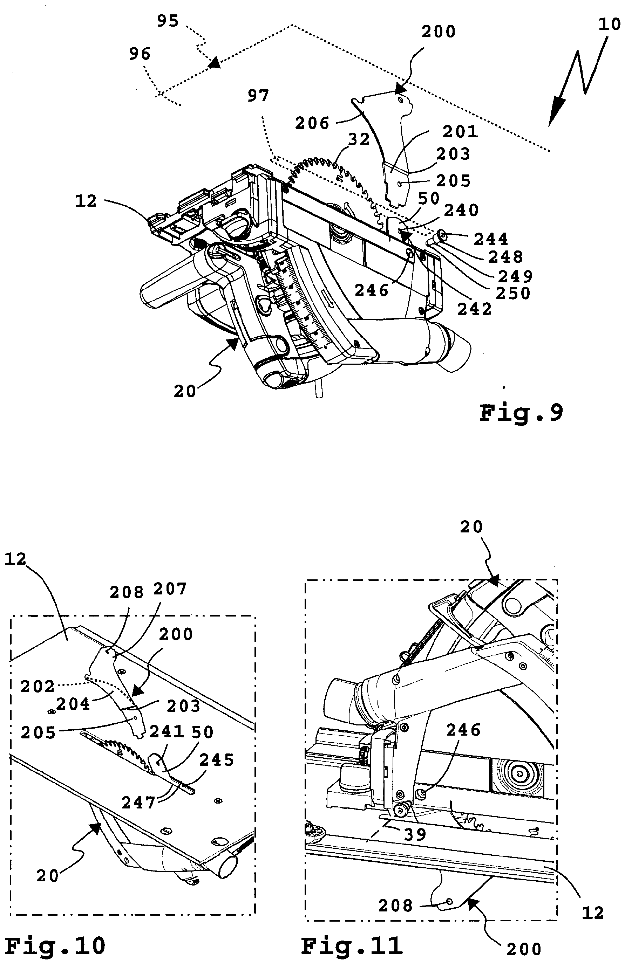

- Figur 9: die Hand-Trennmaschine gemäß vorstehenden Figuren, jedoch von unten an einen stationären Arbeitstisch montiert,
- Figur 10: die Hand-Trennmaschine gemäß vorstehenden Figuren von unten, mit einem noch nicht montierten Trennelement,
- Figur 11: die Hand-Trennmaschine gemäß Figur 10 von schräg oben mit Teil-montiertem Trennelement

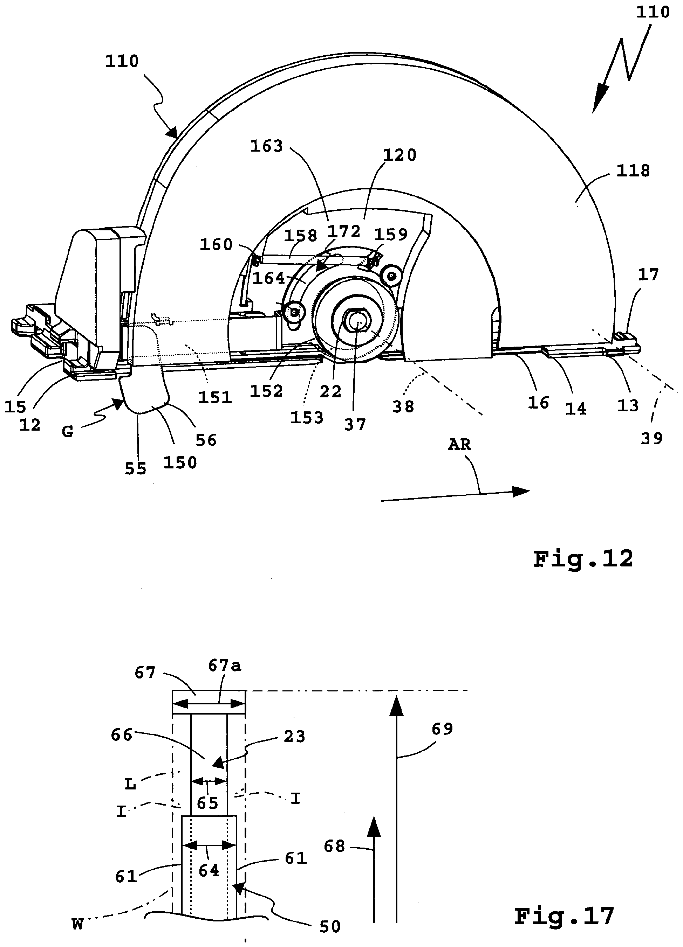

- Figur 12: ein weiteres Ausführungsbeispiel einer erfindungsgemäßen Hand-Trennmaschine mit nicht montiertem Trenn-Werkzeug in einer unteren Tiefeneinstellposition,
- Figur 13: die Hand-Trennmaschine gemäß Figur 12 in einer oberen Tiefeneinstellposition,
- Figur 14: die Hand-Trennmaschine gemäß Figur 13, jedoch mit bereits teilweise in Richtung einer unteren Tiefeneinstellposition verstellter Werkzeugaufnahme,
- Figur 15: die Hand-Trennmaschine gemäß Figuren 12-14, deren Führungselement bereits in der Gebrauchsstellung ist, wobei die Werkzeugaufnahme noch nicht die untersten Tiefeneinstellposition einnimmt, die sie in
- Figur 16: erreicht hat, wobei dort das Führungselement in Richtung seiner Nichtgebrauchsstellung verstellt ist, und
- Figur 17: eine schematische Frontalansicht einer Zusammenschau von einem Führungselement und einem Trenn-Werkzeug einer erfindungsgemäßen Hand-Trennmaschine.

Die in der Zeichnung dargestellten Hand-Trennmaschinen 10, 110 sind als Hand-Sägen 11 ausgestaltet, insbesondere als Tauchsägen und/oder Pendelhaubensägen. Gleiche oder gleichartige Teile der Hand-Trennmaschinen 10, 110 sind mit denselben Bezugsziffern versehen. Zur Verdeutlichung von Unterschieden sind teilweise bei der Hand-Trennmaschine 110 die Bezugszeichen um 100 größer als bei der Hand-Trennmaschine 10.

Die Hand-Trennmaschine 10, 110 weist an ihrer Unterseite einen Führungskörper 12 auf, der zum Auflegen bzw. Führen auf einem Untergrund U, zum Beispiel einem Werkstück W, dient. Der Führungskörper 12 weist eine Führungsplatte 13 auf oder wird durch diese gebildet, deren Unterseite 14 zum Auflegen auf dem Untergrund U bzw. dem Werkstück W dient. Die Unterseite 14 ist im Wesentlichen plan oder glattflächig, weist jedoch vorteilhaft Führungskonturen 15, beispielsweise Führungsnuten auf, die zur Führung an einer Führungsschiene 90 dienen.

Die Führungsschiene 90 ist ebenfalls im Wesentlichen plattenartig, weist an ihrer Oberseite jedoch Führungs-Gegenkonturen 91 auf, beispielsweise einen Führungsvorsprung 92, der in die Führungsnut bzw. Führungskontur 15 der Führungsplatte 13 bzw. des Führungskörpers 12 eingreift.

Eine Werkzeug-Seite 16 des Führungskörpers 12 ist einer Werkzeug-Seite 93 der Führungsschiene 90 zugeordnet.

An einer Oberseite 17 des Führungskörpers 12 ist eine Motorbaugruppe 20, 120 der Hand-Trennmaschine 10, 110 angeordnet. Die Motorbaugruppe 20, 120 umfasst einen Antriebsmotor 21, der eine Werkzeugaufnahme 22 für ein Trenn-Werkzeug 23, zum Beispiel ein Sägeblatt, antreiben kann. Der Antriebsmotor 21 ist in einem Motorgehäuse 24 aufgenommen. Weiterhin umfasst die Motorbaugruppe 20, 120 eine Schutzhaube 25, 125, in der das Werkzeug 23, beispielsweise das Sägeblatt, geschützt aufgenommen ist.

Die Werkzeugaufnahme 22 ist anhand eines Werkzeug-Lagers 37 um eine Werkzeugachse 38 drehbar gelagert.

In der gewählten Zeichnungsperspektive bei der Hand-Trennmaschine 110 ist deren Motorgehäuse durch die Schutzhaube 125 verdeckt.

Am hinteren Bereich der Schutzhaube 25 befindet sich beispielsweise ein Staubabfuhranschluss 26, an dem ein Schlauch 27, beispielsweise ein Staubsaugerschlauch, angebracht werden kann.

Die Motorbaugruppe 20, 120 kann von einem Bediener an einem Führungsgriff 28 und einem Schiebegriff 29 ergriffen werden. Am oberen Endbereich des Führungsgriffs 28 befindet sich ein Schalter 30, mit dem der Antriebsmotor 21 ein- und ausschaltbar ist.

Der Antriebsmotor 21 wird beispielsweise über ein Anschlusskabel 31 mit elektrischem Strom versorgt, wobei selbstverständlich auch eine schnurlose Variante der erfindungsgemäßen Hand-Trennmaschine denkbar ist, die beispielsweise einen mobilen Energiespeicher, zum Beispiel einen Akkupack oder dergleichen, an Bord hat.

Selbstverständlich hat auch die Hand-Trennmaschine 110 die vorgenannten Komponenten, z.B. einen Antriebsmotor, einen Akku und/oder ein Netzkabel, Handgriffe etc., die jedoch in der Zeichnung nicht sichtbar sind.

Die Motorbaugruppe 20, 120 ist mittels eines Tiefeneinstelllagers 32, 132 beweglich, z.B. mittels eines Schwenklagers um eine Schwenkachse 39 schwenkbar, in einer Trenn- oder Tiefeneinstellrichtung oder Schnitttiefenrichtung 34 am Führungskörper 12 gelagert.

Zweckmäßigerweise ist eine Verriegelung vorgesehen, die mittels einer Drucktaste 33 betätigbar bzw. entriegelbar ist. Dann kann die Motorbaugruppe 20, 120 als Ganzes in Richtung des Führungskörpers 12 bzw. dessen Oberseite 17 geschwenkt werden, so dass die Werkzeugaufnahme 22 und mit dieser das an ihr angeordnete Trenn-Werkzeug 23 von einer oberen Tiefeneinstellposition TO, vorliegend einer Schwenkposition, bei der das Trenn-Werkzeug 23 nicht vor die Unterseite 14 der Führungsplatte 13 vorsteht, in eine untere Tiefeneinstellposition TU verstellt, vorliegend geschwenkt, werden kann, in der das Trenn-Werkzeug 23 in einer vom Bediener vorgegebenen oder vorwählbaren Schnitttiefe vor die Unterseite 14 vorsteht. Der Bediener kann also durch Niederdrücken des Schiebegriffs 29 die Eintauchtiefe und somit die Schnitttiefe des Trenn-Werkzeugs 23 in das Werkstück W in an sich bekannter Weise wählen.

Das Trenn-Werkzeug 23 schwenkt an der Werkzeug-Seite 16 des Führungskörpers 12 vorbei und, wenn die Hand-Trennmaschine 10 auf der Führungsschiene 90 angeordnet ist, auch an der Werkzeug-Seite 93 der Führungsschiene 90.

Die Motorbaugruppe 20, 120 ist weiterhin um eine sich in Längsrichtung des Führungskörpers 12, d.h. in Arbeitsrichtung AR oder Schnittrichtung der Hand-Trennmaschine 10 erstreckende Schwenkachse anhand eines zweiten Schwenklagers 35 einer Schrägstelleinrichtung 36 schwenkbar, so dass beispielsweise Gehrungsschnitte oder Schrägschnitte einstellbar sind.

Zur Einstellung einer Eintauchtiefe des Trenn-Werkzeugs 23 in den Untergrund U bzw. das Werkstück W dient eine Tiefenanschlageinrichtung 40. Die Tiefenanschlageinrichtung 40 umfasst einen Skalenkörper 41 und ein Tiefenanschlagelement 42, das relativ zum Skalenkörper 41 in einer Führungskulisse verschieblich gelagert ist. An dem Tiefenanschlagelement 42 ist ein Anschlag-Einstellelement 43 mit einer oberen Anschlagfläche 44 verstellbar gelagert, an der ein an der Motorbaugruppe 20 angeordneter Anschlag 45 anschlagen kann.

Die Tiefeneinstellung bzw. Tiefenbegrenzung für die Motorbaugruppe 20 ist bei der Hand-Trennmaschine 10 durch eine Anzeigeanordnung 46 erleichtert, die eine Führungskörper-Skala 47a und eine Schienen-Skala 47b, die beispielsweise Teilstriche in einem Raster enthalten oder umfassen, die einer Eintauchtiefe des Trenn-Werkzeugs 23 in den Untergrund in Millimetern entsprechen. Zwischen den beiden Skalen 47a, 47b ist noch eine Zahlenreihe oder eine Zahlenskala angeordnet, die beiden Skalen 47a, 47b zugeordnet ist.

Ein Index 49a an einem Indexkörper 48 ist dem Betrieb der Hand-Trennmaschine nur mit dem Führungskörper 12, d.h. ohne die zugehörige Führungsschiene 90 zugeordnet. Der andere Index 49b ist dem Betrieb der Hand-Trennmaschine 10 mit der Führungsschiene 90 zugeordnet. Der Indexkörper 48 wiederum ist an dem Tiefenanschlagelement 42 angeordnet

Das Tiefeneinstelllager 32 ist in Arbeitsrichtung AR hinten, das Tiefeneinstelllager 132 ist in Arbeitsrichtung AR vorn.

Eine Haube 18 der Hand-Trennmaschine 10 ist feststehend. Die Haube 18 ist seitlich durch einen Deckel 19 verschlossen.

Eine Haube 118 der Hand-Trennmaschine 110 ist als eine Pendelhaube ausgestaltet und schwenkt um die Schwenkachse 39.

Die Herstellung eines Trennschnittes S in das Werkstück W mithilfe des Trenn-Werkzeugs 23 wird durch ein Führungselement 50, 150 erleichtert, das in Arbeitsrichtung AR hinter dem Trenn-Werkzeug 23 anordenbar ist. Das Führungselement 50, 150 ist zwischen einer nach unten vor die Unterseite 14 des Führungskörpers 12 bzw. der Führungsplatte 13 vorstehenden Gebrauchsstellung G und einer Nichtgebrauchsstellung N verstellbar, in der es nicht vor die Unterseite 14 des Führungskörpers 12 vorsteht.

In der Gebrauchsstellung G unterstützt das Führungselement 50, 150 den Bediener dabei, in das Werkstück W einen Trennschnitt S einzubringen. Das Führungselement 50, 150 kann nämlich in der Art einer Finne hinter dem Trenn-Werkzeug 23 hergezogen werden, wobei es dann in einen Schlitz L des Werkstücks W eingreift, der durch den Trennschnitt S in dem Werkstück W gebildet ist.

Das Führungselement 50, 150 ist beispielsweise plattenartig. Das Führungselement 50, 150 liegt in seiner Gebrauchsstellung G beispielsweise mit seinen Seitenflächen 61 an den Innenseiten I des Schlitzes L an oder gleitet an den Innenseiten I des Schlitzes L entlang, so dass die Hand-Trennmaschine 10, 110 eine Seitenführung im Schlitz L des Werkstücks W hat. es versteht sich, dass auch eine nur einseitige Führung gegeben sein kann, d.h. beispielsweise dass das Führungselement 50, 150 mit nur einer Seitenfläche 61 an einer Werkstückkante anliegen kann.

Das Führungselement 50, 150 ist an einem Schwenkarm 51, 151 schwenkbar gelagert. Der Schwenkarm 51, 151 weist einen Lagerbereich 52, 152 auf, an dem eine Lageröffnung 53, 153 vorhanden ist. Die Lageröffnung 53, 153 wird von der Werkzeugwelle durchdrungen, an deren freiem Ende die Werkzeugaufnahme 22 angeordnet ist. Mithin schwenkt also der Schwenkarm 51 um die Werkzeugachse 38 des Werkzeug-Lagers 37. Der Lagerbereich 52, 152 und das Führungselement 50, 150 sind an einander entgegengesetzten Längsendbereichen des Schwenkarms 51, 151 vorgesehen. Somit schwenkt also das Führungselement 50, 150 um die Werkzeugachse 38.

Die Lageröffnung 53 und ein nicht näher beschriebener Bereich der Motorbaugruppe 20, 120, an dem der Schwenkarm 51, 151 schwenkbar gelagert ist und der von dem Werkzeug-Lagers 37 oder der Werkzeugwelle durchdrungen ist, bilden Bestandteile einer Führungslageranordnung 62.

An dieser Stelle sei bemerkt, dass anders als bei der Führungslageranordnung 62 nicht nur eine reine Schwenklagerung für ein Führungselement möglich ist, sondern selbstverständlich auch eine Schiebelagerung oder eine Schwenk-Schiebe-Lagerung eines Führungselements relativ zum Beispiel zur Werkzeugachse 38 bei einer erfindungsgemäßen Hand-Trennmaschine ohne weiteres möglich sind.

Das Führungselement 50, 150 hat einen freien Endbereich 54, der ausgerundet ist. Der freie Endbereich 54 kann also beispielsweise auf der Oberseite des Werkstücks W entlang gleiten.

An seiner dem Trenn-Werkzeug 23 zugewandten Seite weist das Führungselement 50, 150 eine Aufgleitschräge 56 auf, die eine Neigung schräg zur Arbeitsrichtung AR aufweist. Der von dem Trenn-Werkzeug 23 entferntere, beim freien Endbereich 54 befindliche Bereich der Aufgleitschräge 56 hat einen größeren Abstand zu Unterseite 14 der Führungsplatte 13 bzw. des Führungskörpers 12 als ein näher beim Trenn-Werkzeug 23 befindliche Abschnitt der Aufgleitschräge 56, wenn das Führungselement 50, 150 seine Gebrauchsstellung G einnimmt. Somit kann also das Führungselement 50, 150 über eventuell im Schlitz L vorhandene Hindernisse hinweg gleiten.

Der Schwenkarm 51, 151 ist zwischen dem Trenn-Werkzeug 23 und einer Wand 63 der Motorbaugruppe 20, 120 angeordnet. Im Übergangsbereich zwischen dem Schwenkarm 51, 151 und dem Führungselement 50, 150 ist eine Stufe 57 oder ein beispielsweise U-förmiger Übergangsbereich 157 vorgesehen, so dass das Führungselement 50, 150 mit dem Trenn-Werkzeug 23, zum Beispiel ein Sägeblatt, fluchtet.

Das Führungselement 50, 150 ist durch eine Feder 58, 158 in Richtung der Gebrauchsstellung G belastet. Die Feder 58, 158 ist an einem Haltepunkt 59, 159 mit dem Schwenkarm 51, 151 und an einem Haltepunkt 60, 160 mit dem Führungskörper 12 oder einem damit verbundenen Bauteil oder der Motorbaugruppe 20 verbunden.

Der Haltepunkt 59 befindet sich beispielsweise etwa längsmittig zwischen den Endbereichen des Schwenkarms 51. Der zugeordnete andere Haltepunkt 60 wiederum ist an der Führungsplatte 13 bzw. dem Führungskörper 12 vorgesehen. Die Feder 58 verläuft etwa quer, insbesondere mit leichter Schrägneigung bezüglich der Unterseite 14 des Führungskörpers 12. Somit zieht also die Feder 58 den Schwenkarm 51 und das Führungselement 50 vor die Unterseite 14 des Führungskörpers 12 vor.

Der Haltepunkt 159 ist im Lagerbereich 152 des Schwenkarms 151 vorgesehen. Der zugeordnete Widerlager-Haltepunkt 160 ist an der Motorbaugruppe 120 vorgesehen. Die Feder 158 verläuft etwa parallel zur Fläche der Unterseite 14 des Führungskörpers 12. Die Feder 158 erstreckt sich beispielsweise über die Werkzeugachse 38 hinweg. Die Feder 158 bewirkt also ein Drehmoment auf den Lagerbereich 152 des Schwenkarms 151 in einem solchen Sinne, dass das Führungselement 150 vor die Unterseite 14 des Führungskörpers 12 kraftbeaufschlagt ist.

Es versteht sich, dass die Federn 58 und 158 eine optionale Maßnahme darstellen und selbstverständlich allein schon die Gewichtskraft der Führungselemente 50, 150 ausreichen kann, um diese in Richtung der Gebrauchsstellung G zu beaufschlagen.

Das Führungselement 50 oder 150 kann also bereits durch seine Gewichtskraft, bevorzugt jedoch unterstützt durch die Feder 58 oder 158 in den Schlitz L hinein gelangen. Dabei hat das Führungselement 50 oder 150 zunächst eine Führungsfunktion, d.h. es kann an den Innenseiten I des Schlitzes L entlang gleiten. Zugleich entfaltet das Führungselement 50 oder 150 auch eine Art Spaltkeil-Funktion und verhindert zuverlässig, dass die Innenseiten I sich aufeinander zu bewegen und ein Verklemmen des Trenn-Werkzeugs 23 an oder in dem Werkstück W verhindern. Eine Führungselement-Querbreite 64 des Führungselements 50 oder 150 ist nämlich so gewählt, dass sie etwas größer als die Querbreite 65 eines Grundkörpers 66 des Trenn-Werkzeug 23 ist, jedoch etwas kleiner als eine Querbreite 67a von Schneidelementen 67 des Trenn-Werkzeug 23. Somit läuft das Führungselement 50 oder 150 sozusagen hinter den Schneidelementen 67 hinterher, wenn der Trennschnitt S durchgeführt wird, und hält gleichzeitig die Innenseiten I des Schlitzes L auseinander.

Dabei wurde festgestellt, dass es genügt, wenn das Führungselement 50 oder 150 in seiner Gebrauchsstellung G zwar um eine gewisse Führungselement-Tiefe 68 vor die Unterseite 14 des Führungskörpers 12 vorsteht, jedoch nicht so weit, wie eine Werkzeug-Tiefe 69, in der das Trenn-Werkzeug 23 in seiner untersten Tiefeneinstellposition TU vor die Unterseite 14 des Führungskörpers 12 vorsteht. Beispielsweise beträgt die Führungselement-Tiefe 68 maximal 70-80 % der Werkzeug-Tiefe 69. Im vorliegenden Fall ist die Führungselement-Tiefe 69 sogar noch etwas geringer und beträgt nur etwa 30-45 %. Selbstverständlich sind andere Verhältnisse zwischen der Führungselement-Tiefe und der Werkzeug-Tiefe ohne weiteres möglich.

Ein Außenumfang 70 des Trenn-Werkzeugs 23 verläuft nahe bei dem Führungselement 50 oder 150, zumindest wenn dieses seine Gebrauchsstellung G einnimmt. Beispielsweise ist eine Tangentialseite 71, 171 des Führungselements 50, 150 dem Außenumfang 70 gegenüberliegend. Zwischen dieser Tangentialseite 71, 171 und dem Außenumfang 70 des Trenn-Werkzeug 23 ist ein geringer Abstand vorhanden, der beispielsweise nur 2-25 mm beträgt. Dadurch ist das Führungselement 50, 150 nahe beim Trenn-Werkzeug 23 und kann dementsprechend optimal in den Schlitz L eingreifen und dessen Verengung verhindern und/oder die Trennmaschine 10, 110 optimal führen. Die Tangentialseite 71 des Führungselements 50 verläuft im wesentlichen geradlinig, während die Tangentialseite 171 eine Rundung etwa entsprechend dem Außenumfang 70 des Trenn-Werkzeugs 23 aufweist.

Mithin ist also vorteilhaft der Abstand des freien Endbereichs 54 des Führungselements 50, 150 mindestens einem Radius des Trenn-Werkzeug 23 entsprechend, jedoch nicht wesentlich größer, um die Eigenschaften des Führungselements 50, 150 optimal zum Tragen zu bringen.

Zur optimalen Bewegungskopplung zwischen der Motorbaugruppe 20, 120, also dem die Werkzeugaufnahme 22 lagernden Bauteil, und dem Führungselement 50, 150 sind Kopplungsmittel 72, 172 vorgesehen.

Die Kopplungsmittel 72, 172 haben die Funktion, dass bei einer Verstellung der Motorbaugruppe 20, 120 aus einer oberen Tiefeneinstellposition TO die Führungselemente 50, 150 in Richtung der Gebrauchsstellung G ausfahren bzw. zu einem Ausfahren in die Gebrauchsstellung G freigegeben werden. "Freigeben" deshalb, weil die Federn 58, 158 und/oder die Schwerkraft der Führungselemente 50, 150 in Richtung der Gebrauchsstellung G wirken.

In umgekehrter Richtung sorgen die Kopplungsmittel 72, 172 dafür, dass das jeweilige Führungselement 50 oder 150 in Richtung der Nichtgebrauchsstellung N verstellt wird, auch entgegen der jeweiligen Schwerkraft bzw. der Kraft der Feder 58 oder 158. Die Kopplungsmittel 72, 172 sind teilweise unterschiedlich ausgestaltet:
Zur Verstellung des Führungselements 50, 150 zwischen der Gebrauchsstellung G und der Nichtgebrauchsstellung dient unter anderem auch die Führungslageranordnung 62, insbesondere die Lageröffnung 53 oder 153 bzw. das in die Lageröffnung 53 und 153 eingreifende und somit einen Mitnehmer für das Führungselement 50, 150 bildende Bauteil der Motorbaugruppe 20, 120. Wenn also die Werkzeugaufnahme 22 zwischen den Tiefeneinstellpositionen TU und TO verstellt wird, wird bereits dadurch das Führungselement 50, 150 auf und ab bzw. bezüglich der Unterseite 14 des Führungskörpers 12 vor und zurück verstellt.

Darüber hinaus sind bei den Kopplungsmitteln noch Führungs- und Stellkonturen vorgesehen, die die Bewegung des Führungselements 50, 150 lenken bzw. führen.

Zur Lenkung der Bewegung des Führungselements 50, 150 in Richtung der Nichtgebrauchsstellung N dienen Stellkonturen 73, 173, die mit Stellgegenkonturen 74, 174 am Führungselement 50 oder 150, bzw. einem mit dem jeweiligen Führungselement verbundenen Bauteil, vorliegend beispielsweise den Schwenkarmen 51, 151, zusammenwirken.

Die Motorbaugruppe 20, 120 nimmt das Führungselement 50, 150 in Richtung eines Innenraums der Haube 18, 118 mit, wenn sie in die obere Tiefeneinstellposition TO verstellt wird, beispielsweise indem der Bediener die Motorbaugruppe 20, 120 entsprechend vom Führungskörper 12 weg nach oben verstellt und/oder die Kraft einer Federanordnung wirkt, zum Beispiel einer Feder 9, die sich einerseits am Führungskörper 12 und andererseits an der Motorbaugruppe 20 abstützt.

Die Stellkonturen 73 umfassen eine Nichtgebrauchsstellung-Stellkontur, z.B. Vorsprung 75, der vor die Wand 63 und somit in den Innenraum der Haube 18 vorsteht. Der Vorsprung 75 bildet einen Nichtgebrauchsstellung-Anschlag. Die Stellgegenkonturen 74 umfassen zudem einen Vorsprung 76, der von dem Lagerbereich 52 an der dem Führungselement 50 entgegengesetzten Seite des Schwenkarms 51 absteht, der mit dem Nichtgebrauchsstellung-Vorsprung 75 zusammenwirkt. Der Vorsprung 76 ist vorzugsweise kurvenförmig. Wenn der Schwenkarm 51 von der Motorbaugruppe 20 ausgehend von seiner Gebrauchsstellung G in Richtung des Innenraums der Haube 18 mitgenommen wird, wenn die Motorbaugruppe 20 aus einer unteren Tiefeneinstellposition TU in die obere Tiefeneinstellposition TO verstellt wird, bleibt der Schwenkarm 51 zunächst in einer nach hinten unten bezüglich der Arbeitsrichtung AR geschwenkten Position. Die Anordnung ist vorzugsweise so getroffen, dass das Führungselement 50 in der Gebrauchsstellung G bleibt, bis das Trenn-Werkzeug 23 nicht mehr vor die Unterseite 14 des Führungskörpers 12 vorsteht.

Wenn jedoch das Trenn-Werkzeug 23 diese Position erreicht hat, kommen die Vorsprünge 75, 76 in Eingriff miteinander. Der kurvenförmige Vorsprung 76 gleitet dann am Vorsprung 75 entlang derart, dass der Schwenkarm 51 um die Werkzeugachse 38, die zugleich die Lagerachse der Führungslageranordnung 62 bildet, in einem Sinne von der Nichtgebrauchsstellung N in die Gebrauchsstellung G verschwenkt wird.

Wenn das Trenn-Werkzeug 23 aus der oberen Tiefeneinstellposition TO in eine untere Tiefeneinstellposition TU verstellt wird, verläuft die Kinematik entsprechend umgekehrt, das heißt dass bei einem ersten Abschnitt des Verstellwegs der Motorbaugruppe 20 in Richtung der unteren Tiefeneinstellposition TU das Trenn-Werkzeug 23 noch nicht vor die Unterseite 14 vor verstellt wird, dabei jedoch bereits der Vorsprung 76 vom Vorsprung 75 weg bewegt wird im Sinne einer Drehung um die Schwenkachse 39 des Tiefeneinstelllagers 32, so dass der kurvenförmige Vorsprung 76 an dem Vorsprung 75 entlang gleiten kann und dabei gleichzeitig der Schwenkarm 51 im Sinne eines Verstellens des Führungselements 50 in Richtung der Gebrauchsstellung G um die Werkzeugachse 38 schwenken kann.

Dabei wird der Schwenkarm 51 zweckmäßigerweise durch die Feder 58 sozusagen in die Gebrauchsstellung G gezogen, insbesondere dann, wenn die Hand-Trennmaschine 10 beispielsweise über Kopf verwendet wird, so dass die Unterseite 14 des Führungskörpers 12 sozusagen die Oberseite des Führungskörpers 12 bildet.

Die Kopplungsmittel 72 sorgen also dafür, dass das Führungselement 50 bei einer Verstellung der Werkzeugaufnahme 22 und somit des Trenn-Werkzeug 23 aus einer oberen Tiefeneinstellposition TO in eine untere Tiefeneinstellposition TU das Führungselement 50 dem Trenn-Werkzeug 23 vorauseilt und in umgekehrter Richtung zunächst das Trenn-Werkzeug 23 quasi in eine Nichtgebrauchsposition verstellt wird, bevor das Führungselement aus der Gebrauchsstellung G in die Nichtgebrauchsstellung N gelangt.

Zur Begrenzung der Führungselement-Tiefe 68, mit der das Führungselement 50 vor die Unterseite 14 in der Gebrauchsstellung G vorsteht, umfassen die Stellkonturen 73 zudem einen Gebrauchsstellung-Anschlag 77, an dem eine Stellgegenkontur des Führungselements 50 anschlägt. Diese Stellgegenkontur wird von einem Längsende 78 eines ringförmigen Langlochs 79 gebildet, in das der Gebrauchsstellung-Anschlag 77, der beispielsweise von einem Bolzen 80 gebildet wird, eingreift. Der Bolzen 80 ist fest mit der Motorbaugruppe 20 verbunden, beispielsweise in diese eingeschraubt. Der Gebrauchsstellung-Anschlag 77 ist sozusagen ein Drehanschlag, der ein Schwenken des Schwenkarms 51 um die Werkzeugachse 38 begrenzt, so dass das Führungselement 50 nur um einen vordefinierten Schwenkweg um das Trenn-Werkzeug 23 herum in Richtung der Gebrauchsstellung G schwenken kann.

Wenn also die Motorbaugruppe 20 aus der oberen Tiefeneinstellposition TO in eine untere Tiefeneinstellposition TU verstellt wird, wird der Vorsprung 76 vom Vorsprung 75 wegbewegt, so dass das Führungselement 50 in Richtung der Gebrauchsstellung G verschwenkt wird und gleichzeitig der Bolzen 80 in dem Langloch 79 entlang gleiten kann, bis er am Längsende 78 anschlägt und dann ein Weiterschwenken des Schwenkarms 51 begrenzt. Während also die Motorbaugruppe 20 dann noch weiter oben die Schwenkachse 39 in Richtung der unteren Tiefeneinstellposition TU schwenken kann, bleibt das Führungselement 50 in der Führungselement-Tiefe 68 quasi stehen. Zwar schwenkt dann noch sein freier Endbereich 55 um die Schwenkachse 39 des Tiefeneinstelllagers 32. Die Führungselement-Tiefe 68 bleibt jedoch im Wesentlichen konstant, während die Werkzeug-Tiefe 69 weiterhin vergrößert wird.

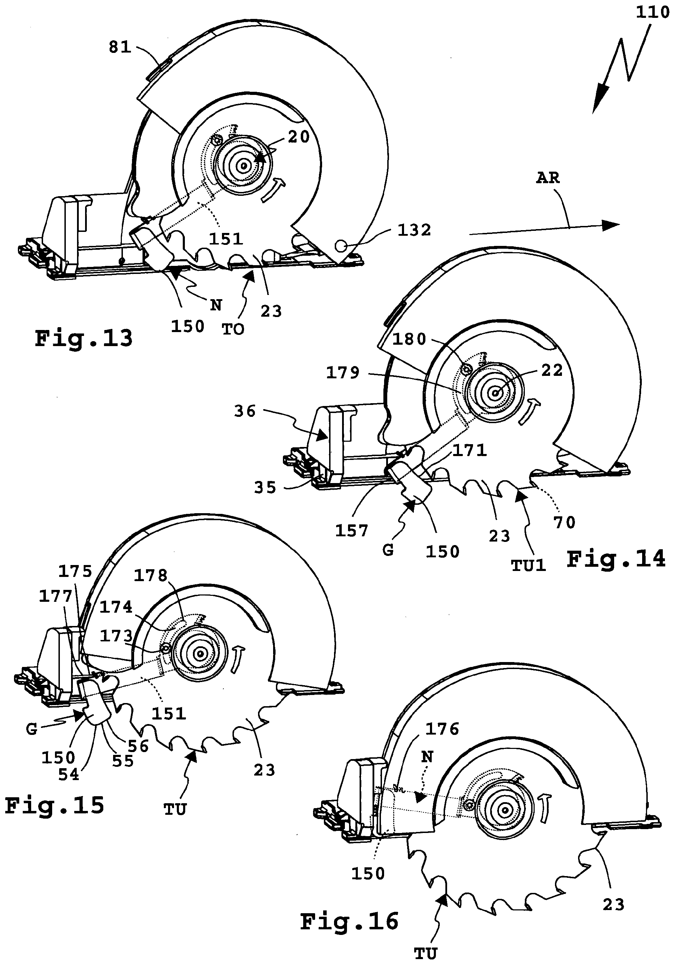

Bei der Hand-Trennmaschine 110 ist ebenfalls eine Bolzen-Langloch-Konstruktion vorhanden, allerdings zur Verstellung des Führungselements 150 in Richtung der Nichtgebrauchsstellung N. Mit der Motorbaugruppe 120 fest verbunden ist nämlich ein Bolzen 180, der in ein Langloch 179 am Lagerbereich 152 des Schwenkarms 151 eingreift. Wenn die Motorbaugruppe 120 in eine obere Tiefeneinstellposition TO verstellt wird, liegt der Bolzen 180 an einem Längsende 178 des Langlochs 179 an (Figur 13) und nimmt somit das Führungselement 150 in Richtung der Nichtgebrauchsstellung N mit. Somit bilden also der Bolzen 180 einen Mitnehmer der Stellkonturen 173 und das Langloch 179 eine der Stellgegenkonturen 174.

Wenn die Motorbaugruppe 120 aus der in Figur 13 dargestellten oberen Tiefeneinstellposition TO nach unten in eine der unteren Tiefeneinstellposition TU verstellt wird (Figuren 14 und 15), schwenkt der Bolzen 180 mit, so dass das Führungselement 150 in Richtung der Gebrauchsstellung G schwenken kann. Die Anordnung ist dabei so getroffen, dass Das Trenn-Werkzeug 23 und das Führungselement 150 ausgehend von der oberen Tiefeneinstellposition TO bzw. der Nichtgebrauchsstellung N simultan über einen ersten Verstellweg-Abschnitt, der in Figur 14 sozusagen endet, in Richtung einer unteren Tiefeneinstellposition TU verstellt werden. Dabei wirkt die Feder 158 unterstützend.

In einer vorbestimmten Tiefeneinstellposition TU1 der Motorbaugruppe 120 schlägt ein Anschlag 176 des Schwenkarms 151 an einem Gegenanschlag 175 an, der beispielsweise fest an der Motorbaugruppe 120 angeordnet sein kann oder beispielsweise auch einen Bestandteil des Führungskörpers 12 bilden könnte. Der Gegenanschlag 175 bildet einen Bestandteil der Stellkonturen 173, Anschlag 176 einen Bestandteil der Stellgegenkonturen 174. Der Gegenanschlag 175 ist beispielsweise als eine Längsführung ausgestaltet, an der der Anschlag 176 anschlagen und entlang gleiten kann, wenn die Motorbaugruppe 120 weiter innen Richtung der untersten Tiefeneinstellposition TU verstellt wird. Somit bleibt also das Führungselement 150 quasi in der in Figur 15 dargestellten Führungselement-Tiefe 68, nämlich der Gebrauchsstellung G, stehen, auch wenn die Motorbaugruppe 120 ausgehend von der Stellung gemäß Figur 14 weiter in Richtung der untersten Tiefeneinstellposition TU verstellt wird, die in Figur 16 dargestellt ist.

Die Führungselemente 50 und 150 haben in der Gebrauchsstellung G ein Spiel in Richtung der Nichtgebrauchsstellung N, auch wenn die Motorbaugruppe 20 oder 120 eine untere oder die unterste Tiefeneinstellposition TU einnimmt.

Das Langloch 79, 179 hat ermöglicht es nämlich, dass das Führungselement 50, 150 auch dann aus der Gebrauchsstellung G in die Nichtgebrauchsstellung N verstellbar ist, wenn die Werkzeugaufnahme 22 oder die Motorbaugruppe 20, 120 eine untere, zum Verstellen des Sägeschnitte oder Trennschnitte S vorgesehene Tiefeneinstellposition TU einnehmen. Die Länge des Langloch 79, 179 definiert also einen Freigang. Es versteht sich, dass ein Langloch nur eine Möglichkeit darstellt, einen solch Freigang zu realisieren. Es genügt nämlich, wenn eine einem Gebrauchsstellung-Anschlag zugeordnete Stellgegenkontur des Führungselements relativ zum Gebrauchsstellung-Anschlag beweglich bleibt, also einen Freigang in Richtung der Nichtgebrauchsstellung N hat, auch wenn die Werkzeugaufnahme eine untere Tiefeneinstellposition einnimmt.

Es versteht sich, dass auch andere Komponenten einer Hand-Trennmaschine zur Führung und Lenkung und/oder Bewegungskopplung eines Führungselements geeignet sein können. So ist beispielsweise an der Haube 118 eine Ausnehmung 81 vorhanden, in die beispielsweise das Führungselement 150 und/oder der Schwenkarm 151 eingreifen können. Eine solche Ausnehmung könnte beispielsweise auch dafür vorgesehen sein, das Führungselement 150 in die Gebrauchsstellung G zu verstellen.

Die Führungselemente 50, 150 und die zugehörigen Lager-, Stell- und Koppelelementen sind vorteilhaft so getroffen, dass sie einen Staubabfuhr-Kanal 8 stets, jedenfalls in der Gebrauchsstellung G, frei halten. Der Staubabfuhr-Kanal 8 verläuft im Innenraum der Haube 18 und führt in Richtung des Staubabfuhr-Anschlusses 26 um das Trenn-Werkzeug 23 herum.

Die Hand-Trennmaschinen 10 und 110 können jedoch auch quasi mit einem festen Spaltkeil ausgerüstet werden oder in optimaler Weise für einen stationären Betrieb im Zusammenhang mit einem Arbeitstisch 95 verwendet werden. Der Arbeitstisch 95 hat eine Tischplatte 96, die beispielsweise auf nicht dargestellten Füßen steht. An der Tischplatte 96 ist ein Schlitz 97 vorhanden, durch die das Trenn-Werkzeug 23 nach oben vor eine Oberseite der Tischplatte 96 vorstehen kann. Insbesondere dann ist es zweckmäßig, wenn die Hand-Trennmaschine 10 oder 110 mit einem Trennelement 200 betrieben wird.

Selbstverständlich kann das nachfolgend im Detail beschriebenen Trennelement 200 auch bei einem mobilen Betrieb der Hand-Trennmaschinen 10 oder 110 sinnvoll eingesetzt werden, beispielsweise wenn besondere Sicherheitsanforderungen einzuhalten sind. Weiterhin kann das Trennelement 200 in der Art eines konventionellen Spaltkeiles ausgestaltet sein, das heißt beispielsweise eine sichelförmige Gestalt haben, so dass ein schematisch dargestellter, sichelförmiger freier Endbereich 202 etwa bis zum am weitesten entfernten Umfangsbereich des Trenn-Werkzeug 23 vorsteht, jedoch nicht wesentlich darüber hinaus.

Innovativ ist das Befestigungskonzept für das Trennelement 200, das optimal fluchtend in Bezug auf das Trenn-Werkzeug 23 an der Hand-Trennmaschine 10 oder 110 befestigbar ist. Dies wird nachfolgend im Zusammenhang mit der Hand-Trennmaschine 10 beschrieben:
An dem Führungselement 50 ist eine Montageöffnung 240 vorhanden, die eine Haltekontur 241 zum Halten des Trennelements 200 bildet. Eine weitere Haltekontur 241 zur Bildung einer Halterung 242 des Trennelements 200 an der Hand-Trennmaschine 10 wird von einer Aufnahme 243 gebildet, die an der Motorbaugruppe 20 vorgesehen ist. Die Aufnahme 243 umfasst eine Schraubaufnahme, die mit einer Durchtrittsöffnung 246 am Deckel 19 fluchtet, so dass ein Montagebolzen 244 durch die Durchtrittsöffnung 246 hindurch in die Aufnahme 243 eingesteckt bzw. eingeschraubt werden kann.

Der Montagebolzen 244 kann beispielsweise dazu genutzt werden, das Führungselement 50 in seiner Nichtgebrauchsstellung N zu halten. Dazu wird der Montagebolzen 244 durch die Durchtrittsöffnung 246 und die Montageöffnung 240 des Führungselements 50 hindurch gesteckt und in die Aufnahme 243 eingeschraubt. Der Montagebolzen 244 dient vorteilhaft jedoch dazu, das Trennelement 200 mit der Hand-Trennmaschine 10 zu verbinden und dabei zugleich das Führungselement 50 in der Nichtgebrauchsstellung N zu sichern.

Das Trennelement 200 greift mit einem Einsteckabschnitt 201 in eine Aufnahme 245 ein, in der das Führungselement 50 in seiner Nichtgebrauchsstellung N aufgenommen ist.

Die Aufnahme 245 kann z.B. als eine Führungsaufnahme ausgestaltet sein, d.h. dass beispielsweise zwischen einander gegenüberliegenden Innenseiten 247, die die Aufnahme 245 begrenzen, kein Spiel oder nur ein solches Spiel vorhanden ist, dass dort das Führungselement 50 seitlich geführt ist. Die Innenseiten 247 der Aufnahme 245 werden beispielsweise vom Deckel 19 und einer Seitenwandfläche des Führungskörpers 12 bereitgestellt. Die Querbreite des Einsteckabschnitts 201 des Trennelements 200 könnte so getroffen sein, dass dieses seitlich an den Innenseiten 247 anliegt, so dass beide Innenseiten 247 Bestandteile der Halterung 142 bilden.

Vorliegend ist jedoch ein größerer Abstand zwischen den Innenseiten der Aufnahme 245 und dem plattenförmigen Führungselement 50 vorgesehen, so dass das Führungselement 50 jeweils mit seitlichem Spiel zu den Innenseiten 247 die Aufnahme 245 einsteckbar ist. Somit können der plattenförmige Einsteckabschnitt 201 und das Führungselement 50 nebeneinander in der Aufnahme 245 angeordnet werden.

Vorzugsweise ist vorgesehen, dass sich der Einsteckabschnitt 201 an einer der Innenseiten 247 seitlich abstützt.

Ferner liegen der Einsteckabschnitt 201 des Trennelements 200 und das Führungselement 50 zweckmäßigerweise flächig aneinander an.

Eine zusätzliche Qualität erhält die Halterung 242 dadurch, dass eine Anlagekontur 203 an dem Einsteckabschnitt 201 vorgesehen ist, die im an der Hand-Trennmaschine 10 montierten Zustand des Trennelements 200 an dem Führungskörper 12 anliegt. Die Anlagekontur 203 wird von einer Stufe zwischen dem Einsteckabschnitt 201 und einem Führungsabschnitt 204 des Trennelements 200 gebildet. Die Stufe liegt an einer Kante zwischen der jeweiligen Innenseite 247 und der Unterseite 14 des Führungskörpers 12 einen. Dadurch ist eine Verkippsicherung gegeben dahingehend, dass das Trennelement 200 bezüglich der Arbeitsrichtung AR nicht nach vorn oder hinten schwenkt.

An dem Einsteckabschnitt 201 ist eine Durchtrittsöffnung 205 für den Montagebolzen 244 vorgesehen. Die Durchtrittsöffnung 205 kann optional mit einem Schraubgewinde versehen sein, in das der Montagebolzen 244 einschraubbar ist.

Der Montagebolzen 244 hat eine stufige Gestalt, wobei ein sich an einen Schraubenkopf anschließender Abschnitt 248 mit einem größeren Durchmesser zur flächigen Anlage an der Innenseite der Durchtrittsöffnung 246 vorgesehen ist. Ein sich in Richtung eines freien Endabschnittes 250 des Montagebolzen 244 anschließender Abschnitt 249 des Montagebolzen 244 hat einen gegenüber dem Abschnitt 248 kleineren Durchmesser, der mit dem Innendurchmesser der Durchtrittsöffnung 205 des Trennelements 200 und der Aufnahme 243 am Führungselement 50 korrespondiert und an diesen Innendurchmesser im Wesentlichen flächig anliegt.

Diese Maßnahmen tragen dazu bei, dass das Trennelement 200 optimal mit den feststehenden Komponenten der Hand-Trennmaschine 10 sowie mit dem Führungselement 50 verbindbar ist, so dass der Führungsabschnitt 204 im montierten Zustand des Trennelements 200 quer zur Arbeitsrichtung AR die Position des Führungselements 50 einnimmt, das dieses in seiner Gebrauchsstellung G hat. Somit fluchtet also der Führungsabschnitt 204 in Arbeitsrichtung AR sehr genau mit dem Trenn-Werkzeug 23.

Zugleich ist vorteilhaft dadurch gewährleistet, dass das Führungselement 50 in seiner Nichtgebrauchsstellung N fixiert ist und zudem dass die Halterung 242 dem Trennelement 200 einen sicheren Halt bietet.

Die Montageöffnung 240 des in der Nichtgebrauchsstellung N durch das Trennelement 200 fixierten Führungselements 50 fluchtet mit der Aufnahme 243 und liegt mit dieser zusammen in Richtung der Schwenkachse 39. Somit ist es möglich, die Motorbaugruppe 20 um die Schwenkachse 39 des Tiefeneinstelllagers 32 zu schwenken, auch wenn das Trennelement 200 mit der Motorbaugruppe 20 durch den Montagebolzen 244 verbunden ist. Diese Maßnahme ist insbesondere für einen mobilen Betrieb der Hand-Trennmaschine 10 vorteilhaft, das heißt abseits des Arbeitstischs 95.

Der Führungsabschnitt 204 ist plattenartig, ebenso wie das Führungselement 50. Eine Querbreite des Führungsabschnitt 204 quer zur Arbeitsrichtung AR entspricht der Führungselement-Querbreite 64, so dass das Trennelement 200 die gleichen Führungs- und Trennqualitäten wie das Führungselement 50 hat. Das Trennelement 200 steht jedoch weiter vor die Unterseite 14 des Führungskörpers 12 vor, jedenfalls bis zu einem am weitesten von der Unterseite 14 des Führungskörpers 12 entfernten Bereich 82 des Trenn-Werkzeugs 23.

Ein neben dem Außenumfang 70 des Trenn-Werkzeugs verlaufender Innenumfang-Abschnitt 206 des Führungsabschnitts 204 hat einen bogenförmigen Verlauf. Vorteilhaft ist über einen Winkelbereich von etwa 90° ein geringer Abstand zwischen dem Innenumfang-Abschnitt 206 und dem Trenn-Werkzeug 23 vorhanden. Das Trennelement 200 hat somit eine optimale Führungsqualität.

Vor den Führungsabschnitt 204 steht noch zum freien Ende des Trennelements 200 hin ein Stützabschnitt 207 vor, der zum Abstützen beispielsweise einer Schutzhaube dient, wenn die Hand-Trennmaschine an dem Arbeitstisch 95 befestigt ist. Am Stützabschnitt 207 ist beispielsweise eine Bohrung 208 zur Befestigung der nicht dargestellten Schutzhaube vorhanden.

## Patentansprüche

1. Hand-Trennmaschine, insbesondere elektrische Handsägemaschine oder Mauerschlitzfräse, mit einem mit seiner Unterseite (14) auf einen Untergrund (U) auflegbaren Führungskörper (12), insbesondere einer Führungsplatte (13), und einer Motorbaugruppe (20; 120), die einen Antriebsmotor (21) und eine durch den Antriebsmotor (21) antreibbare Werkzeugaufnahme (22) für ein Trenn-Werkzeug (23), insbesondere ein Sägeblatt umfasst, das zur Herstellung eines Trennschnittes (S) in dem Werkstück (W) in einer Arbeitsrichtung (AR) führbar ist, wobei die Werkzeugaufnahme (22) bezüglich des Führungskörpers (12) insbesondere zusammen mit der Motorbaugruppe (20; 120) anhand eines Tiefeneinstelllagers (32, 132), insbesondere eines Schwenklagers (35), in einer Tiefeneinstellrichtung (34) zwischen einer oberen Tiefeneinstellposition (TO) und mindestens einer unteren Tiefeneinstellposition (TU) beweglich gelagert ist, wobei das Trenn-Werkzeug (23) in der oberen Tiefeneinstellposition (TO) nicht oder weniger weit vor die Unterseite (14) des Führungskörpers (12) vorsteht als in der mindestens einen unteren Tiefeneinstellposition (TU), wobei die Hand-Trennmaschine ein Führungselement (50; 150) aufweist, das anhand einer von dem Tiefeneinstelllager (32, 132) separaten Führungslageranordnung (62) bezüglich des Führungskörpers (12) in Tiefeneinstellrichtung (34) beweglich gelagert und bezogen auf die Arbeitsrichtung (AR) vor oder hinter dem Trenn-Werkzeug (23) in eine Gebrauchsstellung (G) positionierbar ist, wobei sie einen insbesondere an der Motorbaugruppe (20; 120) angeordneten Staubabfuhr-Kanal (8) aufweist, und wobei die Führungslageranordnung (62) und/oder das Führungselement (50; 150) zumindest bei der Herstellung des Trennschnittes (S) außerhalb des Staubabfuhr-Kanals (8) angeordnet sind, **dadurch gekennzeichnet, dass** das Führungselement (50; 150) an einem Schwenkarm (51; 151) angeordnet ist, der um die Werkzeugachse (38) des die Werkzeugaufnahme (22) drehbar lagernden Werkzeug-Lagers (37) schwenkbar gelagert ist.

2. Hand-Trennmaschine nach Anspruch 1, **dadurch gekennzeichnet, dass** das Führungselement (50; 150) anhand der Führungslageranordnung (62) zwischen einer Nichtgebrauchsstellung (N), bei der es nicht vor die Unterseite (14) des Führungskörpers (12) vorsteht, und der Gebrauchsstellung (G), bei der es vor die Unterseite (14) des Führungskörpers (12) vorsteht, verstellbar ist, wobei das Führungselement (50; 150) in der Nichtgebrauchsstellung (N) vorzugsweise im Innenraum einer das Trenn-Werkzeug (23) abdeckenden, bezüglich der Motorbaugruppe (20; 120) festen oder schwenkbar gelagerten Schutzhaube oder Schutzabdeckung angeordnet ist.

3. Hand-Trennmaschine nach einem der vorhergehenden Ansprüche, **dadurch gekennzeichnet, dass** sie Kopplungsmittel (72; 172) zur Bewegungskoppelung des Führungselements (50; 150) mit einem die Werkzeugaufnahme (22) lagernden Bauteil, insbesondere der Motorbaugruppe (20; 120), aufweist.

4. Hand-Trennmaschine nach Anspruch 3, **dadurch gekennzeichnet, dass** die Kopplungsmittel (72; 172) dazu ausgestaltet sind, dass bei einer Verstellung der Werkzeugaufnahme (22) aus der oberen in die mindestens eine untere Tiefeneinstellposition (TU) ein freier Endbereich (54) des Führungselements (50; 150) dem Trenn-Werkzeug (23) vorauseilend oder mit diesem simultan vor die Unterseite (14) des Führungskörpers (12) verstellt wird und/oder dass bei einer Verstellung der Werkzeugaufnahme (22) aus der mindestens einen unteren Tiefeneinstellposition (TU) in Richtung der oberen Tiefeneinstellposition (TO) das Trenn-Werkzeug (23) dem freien Endbereich (54) des Führungselements (50; 150) vorauseilend oder mit diesem simultan zur Unterseite (14) des Führungskörpers (12) hin verstellt wird.

5. Hand-Trennmaschine nach einem der vorhergehenden Ansprüche, **dadurch gekennzeichnet, dass** ein Abstand des freien Endbereichs (54) des Führungselements (50; 150) zu der Unterseite (14) des Führungskörpers (12) in der Gebrauchsstellung (G) bei mindestens zwei Tiefeneinstellpositionen (TU) des Trenn-Werkzeugs (23), in denen das Trenn-Werkzeug (23) unterschiedlich weit vor die Unterseite (14) des Führungskörpers (12) vorsteht, im Wesentlichen gleich bleibt.

6. Hand-Trennmaschine nach einem der vorhergehenden Ansprüche, **dadurch gekennzeichnet, dass** ein freier Endbereich (54) des Führungselements (50; 150) die Gebrauchsstellung (G) zumindest im Wesentlichen bereits erreicht, bevor das Trenn-Werkzeug (23) vor die Unterseite (14) des Führungskörpers (12) vorsteht.

7. Hand-Trennmaschine nach einem der vorhergehenden Ansprüche, **dadurch gekennzeichnet, dass** an einem die Werkzeugaufnahme (22) lagernden Bauteil, insbesondere der Motorbaugruppe (20; 120), und/oder einem mit dem Führungskörper (12) verbundenen Bauteil, insbesondere einem Gehäusebereich zur Aufnahme des Trenn-Werkzeugs (23), mindestens eine Stellkontur (73; 173) angeordnet ist, die mit mindestens einer Stellgegenkontur (74; 174) an dem Führungselement (50; 150) und/oder an einem das Führungselement (50; 150) haltenden Bauteil und/oder an der Führungslageranordnung (62) zusammenwirkt, um das Führungselement (50; 150) in die Nichtgebrauchsstellung (N) oder die Gebrauchsstellung (G) zu verstellen oder eine Bewegung des Führungselements (50; 150) in der Nichtgebrauchsstellung (N) oder der Gebrauchsstellung (G) zu begrenzen.

8. Hand-Trennmaschine nach Anspruch 7, **dadurch gekennzeichnet, dass** die mindestens eine Stellkontur (73; 173) einen Nichtgebrauchsstellung-Anschlag (77) umfasst, an dem eine Stellgegenkontur (74; 174) des Führungselements (50; 150) bei einer Verstellung der Werkzeugaufnahme (22) in Richtung der oberen Tiefeneinstellposition (TO) anschlägt, um das Führungselement (50; 150) in Richtung der Nichtgebrauchsstellung (N) zu verstellen, und/oder dass die mindestens eine Stellkontur (73; 173) einen Gebrauchsstellung-Anschlag (77) umfasst, an dem eine Stellgegenkontur (74; 174) des Führungselements (50; 150) bei einer Verstellung der Werkzeugaufnahme (22) in Richtung einer unteren Tiefeneinstellposition (TU) anschlägt, um eine Bewegung des Führungselements (50; 150) in Richtung der Gebrauchsstellung (G) zu begrenzen.

9. Hand-Trennmaschine nach Anspruch 7 oder 8, **dadurch gekennzeichnet, dass** die mindestens eine Stellkontur (73; 173) und/oder die mindestens eine Stellgegenkontur (74; 174) des Führungselements (50; 150) eine Mitnahmekontur, insbesondere eine Drehmitnahmekontur, umfasst.

10. Hand-Trennmaschine nach einem der vorhergehenden Ansprüche, **dadurch gekennzeichnet, dass** das Führungselement (50; 150) durch die Führungslageranordnung (62) an der Motorbaugruppe (20; 120) gelagert ist.

11. Hand-Trennmaschine nach einem der vorhergehenden Ansprüche, **dadurch gekennzeichnet, dass** die Führungslageranordnung (62) das Führungselement (50; 150) um eine Drehachse, insbesondere die Werkzeugachse (38) eines die Werkzeugaufnahme (22) drehbar lagernden Werkzeug-Lagers (37), schwenkbar und/oder linear oder ausschließlich schwenkbar oder ausschließlich linear verschieblich lagert.

12. Hand-Trennmaschine nach einem der vorhergehenden Ansprüche, **dadurch gekennzeichnet, dass** der Schwenkarm (51; 151) zwischen dem Trenn-Werkzeug (23) und dem Antriebsmotor (21) angeordnet ist und/oder dass zwischen dem Schwenkarm (51; 151) und dem Führungselement (50; 150) eine quer zur Arbeitsrichtung (AR) verlaufende Stufe (57; 157) vorhanden ist.

13. Hand-Trennmaschine nach einem der vorhergehenden Ansprüche, **dadurch gekennzeichnet, dass** das Führungselement (50; 150) durch eine Federanordnung (58, 158) in Richtung der Nichtgebrauchsstellung (N) und/oder in Richtung der Gebrauchsstellung (G) federbelastet ist.

## Claims

1. Hand-operated cutting machine, in particular a power handsaw or a wall groove milling tool, with a guide body (12) which may be placed with its underside (14) on a base (U), in particular a guide plate (13), and with a motor assembly (20; 120) which includes a drive motor (21) and a tool holder (22) for a cutting tool (23), in particular a saw blade, which may be driven by the drive motor (21), and which may be guided in a working direction (AR) to produce a parting cut (S) in the workpiece (W), wherein the tool holder (22) is movably mounted relative to the guide body (12), in particular together with the motor assembly (20; 120), with the aid of a depth setting bearing (32, 132), in particular a swivel bearing (35), in a depth setting direction (34) between an upper depth setting position (TO) and at least one lower depth setting position (TU), wherein the cutting tool (23) in the upper depth setting position (TO) does not protrude or protrudes less from the underside (14) of the guide body (12) than in the lower depth setting position or positions (TU), wherein the hand-operated cutting machine has a guide element (50; 150) which, with the aid of a guide bearing arrangement (62) separate from the depth setting bearing (32, 132), is movably mounted in the depth setting direction (34) relative to the guide body (12) and may be positioned in a position of use (G) in front of or behind the cutting tool (23) in respect of the working direction (AR), wherein it has a dust removal duct (8) located in particular in the motor assembly (20; 120), and wherein the guide bearing arrangement (62) and/or the guide element (50; 150) are or is positioned outside the dust removal duct (8), at least during production of the parting cut (S), **characterised in that** the guide element (50; 150) is mounted on a swivel arm (51; 151) which is pivotably mounted around the tool axis (38) of the tool bearing (37) which rotatably supports the tool holder (22).

2. Hand-operated cutting machine according to claim 1, **characterised in that** the guide element (50; 150) is adjustable, with the aid of the guide bearing arrangement (62), between an inoperative position (N) in which it does not protrude beyond the underside (14) of the guide body (12), and the position of use (G) in which it protrudes beyond the underside (14) of the guide body (12), wherein the guide element (50; 150) in the inoperative position (N) is preferably located in the interior of a protective hood or protective cover which covers the cutting tool (23) and is mounted fixed or pivotably relative to the motor assembly (20; 120).

3. Hand-operated cutting machine according to any of the preceding claims, **characterised in that** it has coupling means (72; 172) for movement coupling of the guide element (50; 150) to a component, in particular the motor assembly (20; 120), which supports the tool holder (22).

4. Hand-operated cutting machine according to claim 3, **characterised in that** the coupling means (72; 172) are so designed that, during adjustment of the tool holder (22) from the upper into the lower depth setting position or positions (TU), a free end section (54) of the guide element (50; 150) is adjusted in advance of the cutting tool (23) or simultaneously with it from the underside (14) of the guide body (12), and/or that, during adjustment of the tool holder (22) from the lower depth setting position or positions (TU) in the direction of the upper depth setting position (TO), the cutting tool (23) is adjusted in advance of or simultaneously with the free end section (54) of the guide element (50; 150) towards the underside (14) of the guide body (12).

5. Hand-operated cutting machine according to any of the preceding claims, **characterised in that** a distance between the free end section (54) of the guide element (50; 150) and the underside (14) of the guide body (12) in the position of use (G) remains substantially the same in at least two depth setting positions (TU) of the cutting tool (23) in which the cutting tool (23) protrudes for a varying distance from the underside (14) of the guide body (12).

6. Hand-operated cutting machine according to any of the preceding claims, **characterised in that** a free end section (54) of the guide element (50; 150) already reaches the position of use (G), at least substantially, before the cutting tool (23) protrudes from the underside (14) of the guide body (12).

7. Hand-operated cutting machine according to any of the preceding claims, **characterised in that** there is provided on a component supporting the tool holder (22), in particular the motor assembly (20; 120), and/or a component connected to the guide body (12), in particular a casing area for holding the cutting tool (23), at least one setting contour (73; 173) which works in conjunction with at least one mating setting contour (74; 174) on the guide element (50; 150) and/or on a component holding the guide element (50; 150) and/or on the guide bearing arrangement (62), in order to adjust the guide element (50; 150) into the inoperative position (N) of the position of use (G) or to limit a movement of the guide element (50; 150) into the inoperative position (N) or the position of use (G).

8. Hand-operated cutting machine according to claim 7, **characterised in that** the setting contour or contours (73; 173) includes or include an inoperative-position stop (77), which is hit by a mating setting contour (74; 174) of the guide element (50; 150) during an adjustment of the tool holder (22) in the direction of the upper depth setting position (TO), in order to adjust the guide element (50; 150) in the direction of the inoperative position (N), and/or that the setting contour or contours (73; 173) includes or include a position-of-use stop (77), which is hit by a mating setting contour (74; 174) of the guide element (50; 150) during an adjustment of the tool holder (22) in the direction of the lower depth setting position (TU), in order to limit a movement of the guide element (50; 150) in the direction of the position of use (G).

9. Hand-operated cutting machine according to claim 7 or 8, **characterised in that** the setting contour or contours (73; 173) and/or the mating setting contour or contours (74; 174) of the guide element (50; 150) include(s) a driving contour, in particular a rotary driving contour.

10. Hand-operated cutting machine according to any of the preceding claims, **characterised in that** the guide element (50; 150) is supported on the motor assembly (20; 120) by the guide bearing arrangement (62).

11. Hand-operated cutting machine according to any of the preceding claims, **characterised in that** the guide bearing arrangement (62) supports the guide element (50; 150) around a rotation axis, in particular the tool axis (38) of a tool bearing (37) rotatably supporting the tool holder (22), movable pivotably and/or in a straight line or solely pivotably or solely in a straight line.

12. Hand-operated cutting machine according to any of the preceding claims, **characterised in that** the swivel arm (51; 151) is located between the cutting tool (23) and the drive motor (21) and/or that a step (57; 157) running transversely to the working direction (AR) is provided between the swivel arm (51; 151) and the guide element (50; 150).

13. Hand-operated cutting machine according to any of the preceding claims, **characterised in that** the guide element (50; 150) is spring-loaded by a spring assembly (58, 158) in the direction of the inoperative position (N) and/or in the direction of the position of use (G).

## Revendications

1. Machine de coupe portable, en particulier scie portable ou rainureuse murale électrique, avec un corps de guidage (12), en particulier une plaque de guidage (13), pouvant être posé avec son côté inférieur (14) sur un support (U), et un groupe moteur (20 ; 120), qui comprend un moteur d'entraînement (21) et un logement d'outil (22), pouvant être entraîné par le moteur d'entraînement (21), pour un outil de coupe (23), en particulier une lame de scie, qui peut être guidé dans une direction de travail (AR) pour la réalisation d'une coupe de séparation (S) dans la pièce à usiner (W), dans laquelle le logement d'outil (22) est logé de manière mobile par rapport au corps de guidage (12) en particulier conjointement avec le groupe moteur (20 ; 120) à l'aide d'un palier de réglage de profondeur (32, 132), en particulier d'un palier pivotant (35), dans une direction de réglage de profondeur (34) entre une position de réglage de profondeur supérieure (TO) et au moins une position de réglage de profondeur inférieure (TU), dans laquelle l'outil de coupe (23) dans la position de réglage de profondeur supérieure (TO) ne dépasse pas ou bien moins du côté inférieur (14) du corps de guidage (12) que dans l'au moins une position de réglage de profondeur inférieure (TU), dans laquelle la machine de coupe portable présente un élément de guidage (50 ; 150), qui est logé de manière mobile par rapport au corps de guidage (12) dans la direction de réglage de profondeur (34) à l'aide d'un agencement de palier de guidage (62) distinct du palier de réglage de profondeur (32, 132) et positionnable par rapport à la direction de travail (AR) devant ou derrière l'outil de coupe (23) dans une position d'utilisation (G), dans laquelle elle présente un canal d'évacuation de poussière (8) agencé en particulier au niveau du groupe moteur (20 ; 120), et dans laquelle l'agencement de palier de guidage (62) et/ou l'élément de guidage (50 ; 150) sont agencés au moins lors de la réalisation de la coupe de séparation (S) en dehors du canal d'évacuation de poussière (8), **caractérisée en ce que** l'élément de guidage (50 ; 150) est agencé au niveau d'un bras pivotant (51 ; 151), qui est logé de manière pivotante autour de l'axe d'outil (38) du palier d'outil (37) logeant de manière rotative le logement d'outil (22).

2. Machine de coupe portable selon la revendication 1, **caractérisée en ce que** l'élément de guidage (50 ; 150) est réglable à l'aide d'un agencement de palier de guidage (62) entre une position de non-utilisation (N), dans laquelle il ne dépasse pas du côté inférieur (14) du corps de guidage (12), et la position d'utilisation (G), dans laquelle il dépasse du côté inférieur (14) du corps de guidage (12), dans laquelle l'élément de guidage (50 ; 150) est agencé dans la position de non-utilisation (N) de préférence dans l'espace intérieur d'un capot de protection ou recouvrement de protection, logé de manière fixe ou pivotante par rapport au groupe moteur (20 ; 120), recouvrant l'outil de coupe (23).

3. Machine de coupe portable selon l'une quelconque des revendications précédentes, **caractérisée en ce qu'**elle présente des moyens de couplage (72 ; 172) pour le couplage en mouvement de l'élément de guidage (50 ; 150) avec un composant, en particulier le groupe moteur (20 ; 120), logeant le logement d'outil (22).

4. Machine de coupe portable selon la revendication 3, **caractérisée en ce que** les moyens de couplage (72 ; 172) sont configurés de sorte que lors d'un réglage du logement d'outil (22) de la position de réglage de profondeur supérieure à l'au moins une position de réglage de profondeur inférieure (TU), une zone d'extrémité libre (54) de l'élément de guidage (50 ; 150) est réglée avant l'outil de coupe (23) ou simultanément avec celui-ci devant le côté inférieur (14) du corps de guidage (12) et/ou que lors d'un réglage du logement d'outil (22) de l'au moins une position de réglage de profondeur inférieure (TU) en direction de la position de réglage de profondeur supérieure (TO), l'outil de coupe (23) est réglé avant la zone d'extrémité libre (54) de l'élément de guidage (50 ; 150) ou simultanément avec celle-ci vers le côté inférieur (14) du corps de guidage (12).

5. Machine de coupe portable selon l'une quelconque des revendications précédentes, **caractérisée en ce qu'**une distance de la zone d'extrémité libre (54) de l'élément de guidage (50 ; 150) par rapport au côté inférieur (14) du corps de guidage (12) dans la position d'utilisation (G) pour au moins deux positions de réglage de profondeur (TU) de l'outil de coupe (23), dans lesquelles l'outil de coupe (23) dépasse à des distances différentes du côté inférieur (14) du corps de guidage (12), reste sensiblement identique.

6. Machine de coupe portable selon l'une quelconque des revendications précédentes, **caractérisée en ce qu'**une zone d'extrémité libre (54) de l'élément de guidage (50 ; 150) atteint déjà la position d'utilisation (G) au moins sensiblement avant que l'outil de coupe (23) ne dépasse du côté inférieur (14) du corps de guidage (12).

7. Machine de coupe portable selon l'une quelconque des revendications précédentes, **caractérisée en ce qu'**au niveau d'un composant, en particulier le groupe moteur (20 ; 120), logeant le logement d'outil (22), et/ou d'un composant, en particulier d'une zone de boîtier pour la réception de l'outil de coupe (23), relié au corps de guidage (12), est agencé au moins un contour de réglage (73 ; 173), qui coopère avec au moins un contre-contour de réglage (74 ; 174) au niveau de l'élément de guidage (50 ; 150) et/ou au niveau d'un composant retenant l'élément de guidage (50 ; 150) et/ou au niveau de l'agencement de palier de guidage (62), pour régler l'élément de guidage (50 ; 150) dans la position de non-utilisation (N) ou dans la position d'utilisation (G) ou limiter un mouvement de l'élément de guidage (50 ; 150) dans la position de non-utilisation (N) ou dans la position d'utilisation (G).

8. Machine de coupe portable selon la revendication 7, **caractérisée en ce que** l'au moins un contour de réglage (73 ; 173) comprend une butée de position de non-utilisation (77), sur laquelle un contre-contour de réglage (74 ; 174) de l'élément de guidage (50 ; 150) bute lors d'un réglage du logement d'outil (22) en direction de la position de réglage de profondeur supérieure (TO), pour régler l'élément de guidage (50 ; 150) en direction de la position de non-utilisation (N), et/ou que l'au moins un contour de réglage (73 ; 173) comprend une butée de position d'utilisation (77), sur lequel un contre-contour de réglage (74 ; 174) de l'élément de guidage (50 ; 150) bute lors d'un réglage du logement d'outil (22) en direction d'une position de réglage de profondeur inférieure (TU), pour limiter un mouvement de l'élément de guidage (50 ; 150) en direction de la position d'utilisation (G),

9. Machine de coupe portable selon la revendication 7 ou 8, **caractérisée en ce que** l'au moins un contour de réglage (73 ; 173) et/ou l'au moins un contre-contour de réglage (74 ; 174) de l'élément de guidage (50 ; 150) comprend un contour d'entraînement, en particulier un contour d'entraînement rotatif.

10. Machine de coupe portable selon l'une quelconque des revendications précédentes, **caractérisée en ce que** l'élément de guidage (50 ; 150) est logé par l'agencement de palier de guidage (62) au niveau du groupe moteur (20 ; 120).

11. Machine de coupe portable selon l'une quelconque des revendications précédentes, **caractérisée en ce que** l'agencement de palier de guidage (62) loge l'élément de guidage (50 ; 150) en coulissement de manière pivotante autour d'un axe de rotation, en particulier de l'axe d'outil (38) d'un palier d'outil (37) logeant en rotation le logement d'outil (22), et/ou de manière linéaire ou de manière exclusivement pivotante ou de manière exclusivement linéaire.

12. Machine de coupe portable selon l'une quelconque des revendications précédentes, **caractérisée en ce que** le bras pivotant (51 ; 151) est agencé entre l'outil de coupe (23) et le moteur d'entraînement (21) et/ou qu'un cran (57 ; 157) s'étendant transversalement à la direction de travail (AR) est présent entre le bras pivotant (51 ; 151) et l'élément de guidage (50 ; 150).

13. Machine de coupe portable selon l'une quelconque des revendications précédentes, **caractérisée en ce que** l'élément de guidage (50 ; 150) est sollicité par ressort par un agencement de ressort (58, 158) en direction de la position de non-utilisation (N) et/ou en direction de la position d'utilisation (G).
